# FASCICULE DE BREVET EUROPEEN

(11) **EP 2 593 486 B1**
(45) Date de publication et mention de la délivrance du brevet: **23.03.2016**
(21) Numéro de dépôt: 11730681.1
(22) Date de dépôt: 12.07.2011
(51) Int. Cl.: C08C 19/28, B60C 1/00, C08K 5/34

(54) **COMPOSITION DE CAOUTCHOUC CONTENANT UN ELASTOMERE MODIFIE, SON PROCEDE DE PREPARATION ET PNEUMATIQUE LA CONTENANT**
KAUTSCHUKZUSAMMENSETZUNG MIT MODIFIZIERTEM ELASTOMER, HERSTELLUNGSPROZESS HIERFÜR UND REIFEN DAMIT
RUBBER COMPOSITION COMPRISING MODIFIED ELASTOMER, PROCESS OF PREPARATION THEREOF AND TIRE CONTAINING RUBBER COMPOSTION

(30) Priorité: 13.07.2010 FR 1002963
(43) Date de publication de la demande: 22.05.2013
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: ARAUJO, José, F-63040 Clermont-Ferrand Cedex 9 (FR); FAVROT, Jean-Michel, F-63040 Clermont-Ferrand Cedex 9 (FR); SALIT, Anne-Frédérique, F-63040 Clermont-Ferrand Cedex 9 (FR); SEEBOTH, Nicolas, F-63040 Clermont-Ferrand cedex 9 (FR)
(74) Mandataire: Le Cam, Véronique Marie Christine
(86) Numéro de dépôt international: PCT/EP2011/061801
(87) Numéro de publication internationale: WO 2012/007442

(56) Documents cités:
- JP-A- 2008 208 163
- US-A1- 2004 106 744
- US-A1- 2006 084 730
- US-A1- 2006 199 917
- MAURIZIO GALIMBERTI, GIANLUCA MELLILLO, FRANCESCA BAIONE, FABIO NEGRONI, SIMONE PENNATI, LAURA SPADACINI, GUISEPPE DI SILVESTRO: "Elastomeric Compounds with Silica. Lower Hysteresis in the Presence of Functionalised Isoprene Oligomers", MACROMOLECULAR SYMPOSIA, vol. 234, 13 mars 2006 (2006-03-13), pages 203-210, XP002612228, Weinheim DOI: 10.1002/masy.200650226

## Description

La présente invention se rapporte à une composition de caoutchouc, utilisable notamment pour la fabrication de pneumatiques, à base d'au moins un élastomère diénique, d'une charge renforçante, d'un agent de réticulation chimique et d'au moins un agent de modification particulier.

Dans le domaine de la fabrication des pneumatiques et en particulier de la formulation des compositions de caoutchouc en contact avec le sol, appelées bandes de roulement, on recherche en permanence des moyens pour améliorer la dispersion des charges au sein des polymères. L'un des moyens pour parvenir à ce résultat est l'utilisation d'agents de couplage capables d'établir des interactions entre le polymère et la charge.

Des agents de couplage d'un polymère avec une charge comprenant des dipôles azotés sont décrits dans les documents publiés sous les numéros US7186845B2 et JP2008208163.

Ces documents décrivent des agents de couplage dipolaires azotés comprenant en outre un hétérocycle, ledit hétérocycle comprenant lui-même un atome d'azote, et un atome d'oxygène et/ou de soufre.

Plus particulièrement les composés décrits sont des nitrones porteuses de fonction oxazolines, thiazolines comme par exemple la (-(2-oxozolyl)-phenyl-N-methylnitrone)

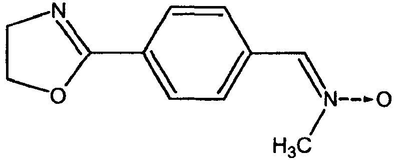

De tels agents de couplage permettent notamment une baisse des pertes hystérétiques de la composition de caoutchouc par une amélioration de la dispersion des charges dans une matrice élastomérique.

Lorsque des polymères diéniques sont amenés à réagir avec de tels agents de couplage, les polymères en résultant porteront les cycles oxazoline ou thiazoline.

Ces cycles présents sur le polymère sont susceptibles de réagir, à leur tour, avec des fonctions de surface des charges (comme le noir de carbone ou la silice) avec lesquels les polymères sont mélangés. Cette réaction conduit à l'établissement de liaisons covalentes entre le polymère modifié par l'agent de couplage et la charge du fait de l'ouverture du cycle oxazoline ou thiazoline.

En plus d'assurer une résistance au roulement faible par la diminution des pertes hystérétiques, on souhaite disposer de matériaux possédant une rigidité élevée aux moyennes déformations (de 50% à 100%) tout en assurant un allongement à la rupture et/ou une contrainte à la rupture élevée.

Or, l'homme de l'art sait que lorsqu'il augmente la densité de liaison gomme/charge et/ou la densité, de réticulation une diminution de l'allongement rupture est observée.

Ainsi, lorsque le nombre de liaisons covalentes entre les chaînes polymères (densité pontale) augmente, la rigidité aux moyennes déformations augmente, mais l'allongement à la rupture diminue. Inversement, si la densité pontale diminue, l'allongement à la rupture augmente, mais la rigidité aux moyennes déformations diminue.

Le but de la présente invention est de proposer une composition de caoutchouc faiblement hystérétiques et possédant une bonne rigidité aux moyennes déformations élevée tout en présentant un allongement à la rupture ou une contrainte à la rupture élevé.

Ce but est atteint en ce que les inventeurs ont découvert que le compromis entre une bonne rigidité à moyenne déformation et un allongement à la rupture élevé pouvait être obtenu en modifiant l'élastomère diénique par greffage au moyen d'un agent de modification spécifique comprenant au moins un dipôle azoté et au moins un groupe associatif azoté. Un élastomère ainsi modifié confère à une composition le contenant des propriétés hystérétiques améliorées.

On entend dans la suite du texte par "taux d'agent de modification" présent dans une composition de caoutchouc, exprimé en pourcentage molaire, le nombre de molécules d'agent de modification présentes dans la composition pour cent motifs d'élastomère diénique de la composition, qu'il s'agisse indifféremment de motifs diéniques ou non diéniques.

Par exemple, si le taux d'agent de modification sur un SBR est de 0,20% molaire, cela signifie qu'il y aura 0,20 motif issu d'agent de modification pour 100 motifs styréniques et butadiéniques de SBR.

Dans le cas où on utilise dans la composition à la fois un élastomère déjà greffé par l'agent de modification et un élastomère diénique non greffé par un agent de modification, le taux d'agent de modification représente le nombre de molécules d'agent de modification greffées pour 100 motifs d'élastomères

diéniques, le nombre de motifs prenant en compte les deux élastomères (greffé et non greffé), en supposant que d'autres molécules d'agent de modification non déjà greffées n'ont pas été ajoutées dans la composition.

On entend dans la suite du texte par "composition à base de" une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Dans la présente description, sauf indication expresse différente, tous les pourcentages (%) indiqués sont des % en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

L'invention a donc pour objet une composition de caoutchouc à base d'au moins un élastomère diénique, une charge renforçante, un agent de réticulation chimique et un agent de modification, ledit agent de modification comprenant au moins un groupement Q, et au moins un groupement A reliés entre eux par au moins et de préférence un groupement « espaceur » Sp dans lequel :
- Q comprend un dipôle contenant au moins et de préférence un atome d'azote,
- A comprend un groupe associatif comprenant au moins un atome d'azote,
   A étant choisi parmi les groupes imidazolidinyle, triazolyle, triazinyle, bis-uréyle, uréido-pyrimidyle
- Sp est un atome ou un groupe d'atomes formant une liaison entre Q et A.

L'invention a également pour objet un procédé pour préparer une composition de caoutchouc pour pneumatique à base d'au moins un élastomère diénique, une charge renforçante, un agent de réticulation chimique et un agent de modification, caractérisé en ce qu'il comprend les étapes suivantes :
- modifier l'élastomère diénique par le greffage post-polymérisation en solution ou en masse d'un agent de modification comprenant au moins un groupement Q, et au moins un groupement A reliés entre eux par au moins et de préférence un groupement « espaceur » Sp dans lequel :
   - Q comprend un dipôle contenant au moins et de préférence un atome d'azote,
   - A comprend un groupe associatif comprenant au moins un atome d'azote, A étant choisi parmi les groupes imidazolidinyle, triazolyle, triazinyle, bis-uréyle, uréido-pyrimidyle
   - Sp est un atome ou un groupe d'atomes formant une liaison entre Q et A,
   - incorporer à l'élastomère diénique ainsi greffé par l'agent de modification, la charge renforçante, en malaxant thermomécaniquement le tout, en une ou plusieurs fois, jusqu'à atteindre une température maximale comprise entre 130°C et 200°C,
   - refroidir l'ensemble à une température inférieure à 100°C,
   - incorporer ensuite l'agent de réticulation chimique,
   - malaxer le tout jusqu'à une température maximale inférieure à 120°C,
   - extruder ou calandrer la composition de caoutchouc ainsi obtenue.

L'invention a encore pour objet un procédé pour préparer une composition de caoutchouc pour pneumatique à base d'au moins un élastomère diénique, une charge renforçante un agent de réticulation chimique et un agent de modification, caractérisé en ce qu'il comprend les étapes suivantes :
- incorporer au cours du mélangeage en masse à l'élastomère diénique, l'agent de modification, puis la charge renforçante, ledit agent de modification comprenant au moins un groupement Q, et au moins un groupement A reliés entre eux par au moins et de préférence un groupement « espaceur » Sp dans lequel :
- Q comprend un dipôle contenant au moins et de préférence un atome d'azote,
- A comprend un groupe associatif comprenant au moins un atome d'azote, A étant choisi parmi les groupes imidazolidinyle, triazolyle, triazinyle, bis-uréyle, uréido-pyrimidyle
- Sp est un atome ou un groupe d'atomes formant une liaison entre Q et A,
en malaxant thermomécaniquement le tout, en une ou plusieurs fois, jusqu'à atteindre une température maximale comprise entre 130°C et 200°C,
- refroidir l'ensemble à une température inférieure à 100°C,
- incorporer ensuite l'agent de réticulation chimique,
- malaxer le tout jusqu'à une température maximale inférieure à 120°C,
- extruder ou calandrer la composition de caoutchouc ainsi obtenue.

Du fait de ses propriétés mécaniques combinant bonne rigidité à moyenne déformation et allongement à la rupture élevé, ainsi qu'une hystérèse amélioreé, la composition de caoutchouc selon l'invention est tout particulièrement adaptée à la fabrication de pneumatiques pour en améliorer le compromis résistance au roulement / tenue aux grandes déformations. Un pneumatique comprenant une telle composition fait également l'objet de l'invention.

Ainsi un premier objet de l'invention est une composition de caoutchouc à base d'au moins un élastomère diénique, une charge renforçante, un agent de réticulation chimique et un agent de modification comprenant au moins un groupement Q, et au moins un groupement A reliés entre eux par au moins et de préférence un groupement « espaceur » Sp tels que définis plus haut.

Le premier composant de la composition de caoutchouc selon l'invention est un élastomère diénique.

Les élastomères diéniques peuvent être classés de manière connue en deux catégories, ceux dits essentiellement insaturés et ceux dits essentiellement saturés. Ces deux catégories d'élastomères diéniques sont envisageables dans le cadre de l'invention.

Un élastomère diénique essentiellement saturé a un taux de motifs ou unités d'origine diénique faible ou très faible (diènes conjugués) qui est toujours inférieur à 15% (% en moles). C'est ainsi, par exemple, que des caoutchoucs butyle ou des copolymères de diènes et d'alpha-oléfines type EPDM entrent dans la définition d'élastomères diéniques essentiellement saturés.

A contrario, par élastomère diénique essentiellement insaturé, on entend un élastomère diénique issu au moins en partie de monomères diènes conjugués, ayant un taux de motifs ou unités d'origine diénique (diènes conjugués) qui est supérieur à 15% (% en moles). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

On entend plus particulièrement par élastomère diénique susceptible d'être utilisé dans l'invention:
(a)- tout homopolymère obtenu par polymérisation d'un monomère diène conjugué ayant de 4 à 12 atomes de carbone;
(b)- tout copolymère obtenu par copolymérisation d'un ou plusieurs diènes conjugués entre eux ou avec un ou plusieurs composés vinyle aromatique ayant de 8 à 20 atomes de carbone;
(c)- un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène; de tels polymères sont décrits en particulier dans les documents WO 2004/035639A1 et US 2005/0239639A1 ;
(d)- un copolymère d'isobutène et d'isoprène (caoutchouc butyle), ainsi que les versions halogénées, en particulier chlorées ou bromées, de ce type de copolymères.

Bien qu'elle s'applique à tout type d'élastomère diénique, on préfère utiliser au moins un élastomère diénique du type fortement insaturé en particulier du type (a) ou (b) ci-dessus.

A titre de diènes conjugués conviennent notamment le butadiène-1,3, le 2-méthyl-1,3-butadiène, les 2,3-di(alkyle en C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatique conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatique. Les élastomères peuvent avoir toute microstructure qui est fonction des conditions de polymérisation utilisées, notamment de la présence ou non d'un agent modifiant et/ou randomisant et des quantités d'agent modifiant randomisant employées. Les élastomères peuvent être par exemple à blocs, statistiques, séquencés, microséquencés, et être préparés en dispersion, en émulsion ou en solution ; ils peuvent être couplés et/ou étoilés ou encore fonctionnalisés avec un agent de couplage et/ou d'étoilage ou de fonctionnalisation.

Conviennent en particulier les élastomères diéniques choisis dans le groupe constitué par les polybutadiènes (BR), les polyisoprènes de synthèse (IR), le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène- styrène (SIR), les copolymères d'isoprène-butadiène-styrène (SBIR) et les mélanges de tels copolymères.

La composition de caoutchouc selon l'invention est à base d'au moins un élastomère diénique et d'au moins un agent de modification. L'élastomère diénique peut être greffé par l'agent de modification préalablement à son introduction dans la composition de caoutchouc, ou bien peut être greffé par réaction avec l'agent de modification lors de la fabrication de la composition.

La composition comprise dans le pneumatique selon l'invention peut donc contenir un seul élastomère diénique greffé par l'agent de modification (soit greffé préalablement à son introduction dans la composition, soit greffé par réaction avec l'agent de modification pendant la fabrication de la composition), ou un mélange de plusieurs élastomères diéniques tous greffés, ou dont certains sont greffés et les autres pas.

Le ou les autres élastomères diéniques utilisés en coupage avec l'élastomère greffés selon l'invention sont des élastomères diéniques conventionnels tels que décrits plus haut qu'ils soient étoilés, couplés, fonctionnalisés ou non. Ces élastomères sont alors présents dans la matrice selon un taux compris entre 0 et 60 pce (les bornes de ce domaine étant exclues), préférentiellement selon un taux allant de plus de 0 à 50 pce, plus préférentiellement encore de plus de 0 à 30 pce.

Dans le cas d'un coupage avec au moins un autre élastomère diénique, la fraction massique d'élastomère greffé selon l'invention dans la matrice élastomérique est majoritaire et de préférence supérieure ou égale à 50% en poids du poids total de la matrice. On appelle fraction massique majoritaire selon l'invention la fraction massique la plus élevée du coupage.

On notera que l'amélioration des propriétés de la composition de caoutchouc selon l'invention sera d'autant plus élevée, que la proportion dudit ou desdits élastomères complémentaires dans la composition selon l'invention sera plus réduite.

Le ou les élastomères diéniques greffés selon l'invention peuvent être utilisés en association avec tout type d'élastomère synthétique autre que diénique, voire avec des polymères autres que des élastomères, par exemple des polymères thermoplastiques.

Un deuxième composant de la composition de caoutchouc selon l'invention est l'agent de modification. Celui-ci comprend au moins un groupement Q, et au moins un groupement A reliés entre eux par au moins et de préférence un groupement « espaceur » Sp dans lequel :
- Q comprend un dipôle contenant au moins et de préférence un atome d'azote,
- A comprend un groupe associatif comprenant au moins un atome d'azote, A étant choisi parmi les groupes imidazolidinyle, triazolyle, triazinyle, bis-uréyle, uréido-pyrimidyle
- Sp est un atome ou un groupe d'atomes formant une liaison entre Q et A.

On entend par dipôle une fonction capable de former une addition dipolaire [1,3] sur une liaison carbone-carbone insaturée.

Par « groupe associatif », on entend des groupes susceptibles de s'associer les uns aux autres par des liaisons hydrogène, ioniques et/ou hydrophobes. Il s'agit selon un mode préféré de l'invention de groupes susceptibles de s'associer par des liaisons hydrogène.

Lorsque les groupes associatifs sont susceptibles de s'associer par des liaisons hydrogène, chaque groupe associatif comporte au moins un « site » donneur et un site accepteur vis-à-vis de la liaison hydrogène de sorte que deux groupes associatifs identiques sont auto-complémentaires et peuvent s'associer entre eux en formant au moins deux liaisons hydrogène.

Les groupes associatifs selon l'invention sont également susceptibles de s'associer par des liaisons hydrogène, ioniques et/ou hydrophobes à des fonctions présentes sur des charges.

Les composés selon l'invention comportant un groupement Q, un groupement « espaceur » et un groupement associatif peuvent par exemple être représentés par la formule (Ia) suivante :

A - Sp - Q (Ia).

Les composés selon l'invention comportant un groupement Q, un groupement « espaceur » et deux groupements associatifs peuvent par exemple être représentés par la formule (Ib) suivante :

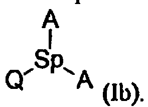

De manière similaire, les composés selon l'invention comportant deux groupements Q, un groupement « espaceur » et un groupement associatif peuvent par exemple être représentés par la formule (Ic) suivante :

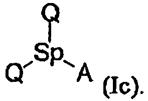

Selon le même principe, les composés selon l'invention comportant deux groupements Q, un groupement « espaceur » et deux groupements associatifs peuvent par exemple être représentés par la formule (Id) suivante :

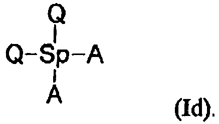

De préférence, le groupement A répond à l'une des formules (II) à (VI)suivantes : 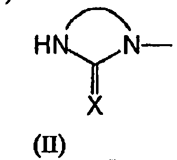 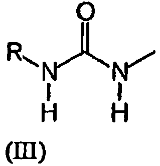 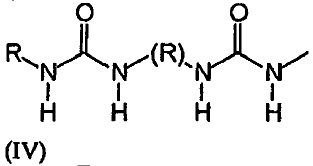 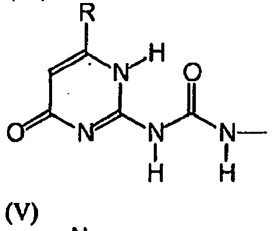 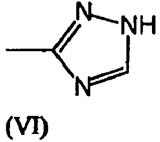 où :
- R désigne un groupement hydrocarboné pouvant éventuellement contenir des hétéroatomes,
- X désigne un atome d'oxygène ou de soufre, de préférence un atome d'oxygène.

De préférence, le groupement A comprend un hétérocycle di ou triazoté, à 5 ou 6 atomes, de préférence diazoté, et comprenant au moins une fonction carbonyle.

De manière encore plus préférée, le groupement A comprend un groupe imidazolidinyle de formule (II).

Le groupement Q est susceptible de se lier à la chaîne élastomère diénique par liaison covalente (greffage). De préférence le groupement Q comprend une fonction oxyde de nitrile, nitrone, ou nitrile imine pouvant se lier à un polymère porteur d'au moins une insaturation, par une cycloaddition de type [3+2].

De préférence le groupement Q est un groupement de formule (VII), (VIII) ou (IX) suivante

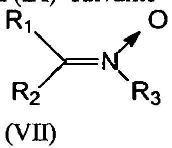

R₄-C≡N→ O (VIII)

R₅-C≡N→ N-R₆ (IX)

dans lesquelles R1 à R6 sont choisis indépendamment parmi un groupe espaceur Sp, un atome d'hydrogène, un groupe alkyle en C1-C20 linéaire ou ramifié, un groupe cycloalkyle en C3-C20 linéaire ou ramifié, un groupe aryle en C6-C20 linéaire ou ramifié, et un groupe de formule (X) 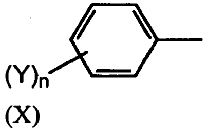 dans laquelle n représente 1, 2, 3, 4 ou 5 et chaque Y représente indépendamment un groupe espaceur Sp, un groupe alkyle ou un halogénure.

Le groupement « espaceur » Sp permet de relier au moins un groupement Q et/ou au moins un groupement associatif, A, et ainsi peut être de tout type connu en soi. Le groupement « espaceur » ne doit cependant pas, ou peu, interférer avec les groupements Q et associatif du composé selon l'invention.

Ledit groupement « espaceur » est donc considéré comme un groupement inerte vis-à-vis du groupement Q. Le groupement « espaceur » est de préférence une chaîne hydrocarbonée, linéaire, ramifiée, cyclique, peut contenir un ou plusieurs radicaux aromatiques, et/ou un ou plusieurs hétéroatomes. Ladite chaîne peut éventuellement être substituée, pour autant que les substituants soient inertes vis-à-vis des groupements Q.

Selon un mode de réalisation préféré, le groupement « espaceur » est une chaîne alkyle linéaire ou ramifiée en C1-C24, de préférence C1-C10 et plus préférentiellement une chaîne alkyle linéaire en C1-C6, éventuellement comprenant un ou plusieurs hétéroatomes choisis parmi les atomes d'azote, de soufre, de silicium ou d'oxygène.

Selon un mode de réalisation de l'invention, le groupement Q est de préférence un groupement de formule (XIa) ou (XIb): 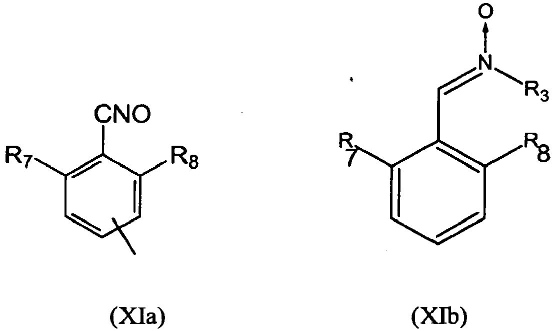 dans lesquelles R7 et R8 représentent indépendamment un hydrogène ou un groupe alkyle en C1-C5, un alcoxyle ou un halogénure et de préférence R7 et R8 représentent indépendamment un groupe alkyle ou un halogénure, et plus préférentiellement R7 et R8 représentent indépendamment un groupe méthyle ou un atome de chlore, R3 est tel que défini précédemment et le groupement A est un groupement de formule (XII) :

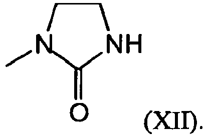

De préférence, le composé destiné à greffer le polymère conformément à l'invention est alors choisi parmi les composés de formule (XIII) à (XXI) suivantes: 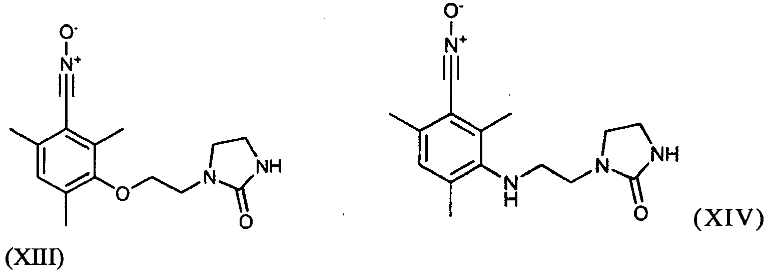 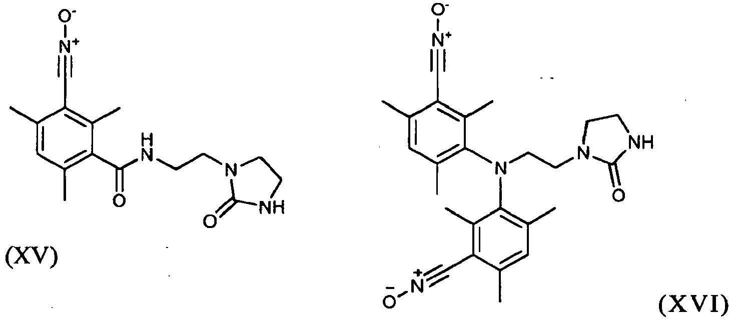 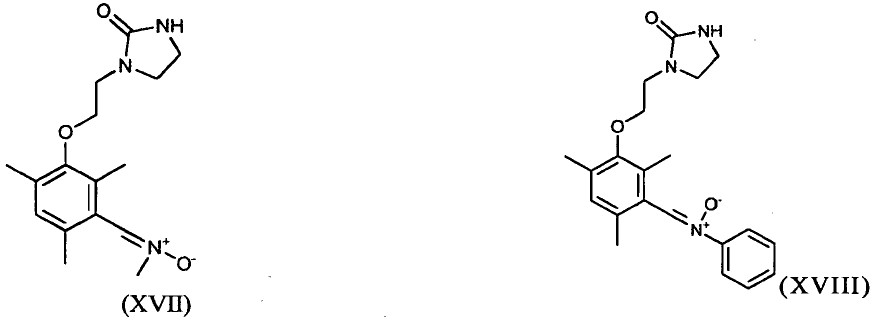 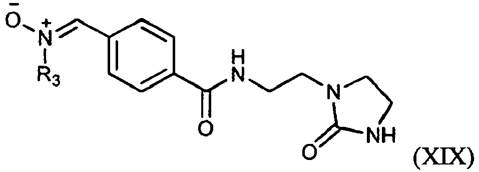 R3 étant tel que défini plus haut. 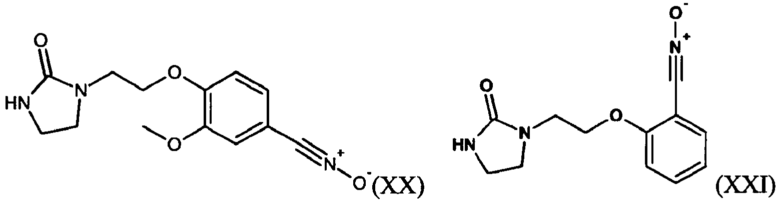 Selon un autre mode de réalisation de l'invention, le composé destiné à greffer le polymère conformément à l'invention est choisi parmi les composés de formule (XXII) et (XXIII). 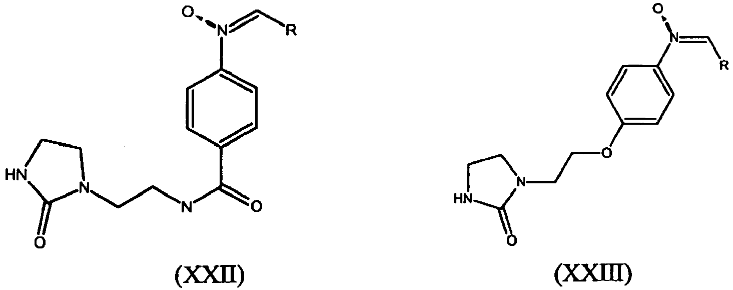 dans lesquelles R est choisi parmi un groupe espaceur Sp, un atome d'hydrogène, un groupe alkyle en C1-C20 linéaire ou ramifié, un groupe cycloalkyle en C3-C20 linéaire ou ramifié, un groupe aryle en C6-C20 linéaire ou ramifié, et un groupe de formule (X) 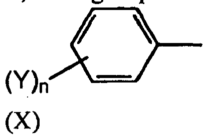 dans laquelle n représente 1, 2, 3, 4 ou 5 et chaque Y représente indépendamment un groupe espaceur Sp, un groupe alkyle ou un halogénure

Selon un mode de réalisation préféré, le taux d'agent de modification varie de 0,01 à 50% molaire, de préférence de 0,01 à 5% molaire.

Un autre composant de la composition selon l'invention est la charge renforçante.

On peut utiliser tout type de charge renforçante connue pour ses capacités à renforcer une composition de caoutchouc utilisable pour la fabrication de pneumatiques, par exemple une charge organique renforçante tel que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone, notamment les noirs du type HAF, ISAF, SAF conventionnellement utilisés dans les pneumatiques (noirs dits de grade pneumatique). On peut aussi utiliser, selon les applications visées, des noirs de séries plus élevées FF, FEF, GPF, SRF. Les noirs de carbone pourraient être par exemple déjà incorporés à l'élastomère diénique sous la forme d'un masterbatch, avant ou après greffage et de préférence après greffage (voir par exemple demandes WO 97/36724 ou WO 99/16600).

Comme exemples de charges organiques autres que des noirs de carbone, on peut citer les charges organiques de polyvinylaromatique fonctionnalisé telles que décrites dans les demandes WO-A-2006/069792 et WO-A-2006/069793.

Par "charge inorganique renforçante", doit être entendu dans la présente demande, par définition, toute charge inorganique ou minérale par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO2), ou du type alumineuse, en particulier de l'alumine (Al2O3).

Selon l'invention, le taux de charge renforçante dans la composition est compris entre 30 et 150 pce, plus préférentiellement entre 50 et 120 pce. L'optimum est différent selon les applications particulières visées.

Selon un mode de réalisation, la charge renforçante comprend majoritairement de la silice, de préférence le taux de noir de carbone présent dans la composition étant compris entre 2 et 20 pce.

Selon un autre mode de réalisation de l'invention, la charge renforçante comprend majoritairement du noir de carbone, voire est exclusivement constituée de noir de carbone.

Pour coupler la charge inorganique renforçante à l'élastomère diénique, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

On utilise notamment de manière connue des silanes polysulfurés, dits "symétriques" ou "asymétriques" selon leur structure particulière, tels que décrits par exemple dans les demandes WO03/002648 et WO03/002649.

Dans les compositions de caoutchouc comprises dans le pneumatique selon l'invention, la teneur en agent de couplage est préférentiellement comprise entre 4 et 12 pce, plus préférentiellement entre 3 et 8 pce.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

Un autre composant de la composition selon l'invention est l'agent de réticulation chimique.

La réticulation chimique permet la formation de liaisons covalentes entre les chaînes d'élastomère. La réticulation chimique peut se faire au moyen d'un système de vulcanisation ou bien au moyen de composés peroxydes.

Le système de vulcanisation proprement dit est à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine).

Le soufre est utilisé à un taux préférentiel compris entre 0,5 et 12 pce, en particulier entre 1 et 10 pce. L'accélérateur primaire de vulcanisation est utilisé à un taux préférentiel compris entre 0,5 et 10 pce, plus préférentiellement compris entre 0,5 et 5,0 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. De préférence, on utilise un accélérateur primaire du type sulfénamide.

Lorsque la réticulation chimique est effectuée au moyen d'un ou plusieurs composés peroxydes, le ou lesdits composés peroxydes représentent de 0,01 à 10 pce.

A titre de composés peroxydes utilisables comme système de réticulation chimique, on peut citer les acyl peroxydes, par exemple le benzoyl peroxyde ou le p-chlorobenzoyl peroxyde, les cétones peroxydes, par exemple le méthyl éthyl cétone peroxyde, les peroxyesters, par exemple le t-butylperoxyacétate, le t-butylperoxybenzoate et le t-butylperoxyphtalate, les alkyl peroxides, par exemple le dicumyl peroxyde, le di-t-butyl peroxybenzoate et le 1,3-bis(t-butyl peroxyisopropyl)benzène, les hydroperoxydes, par exemple le t-butyl hydroperoxyde.

La composition de caoutchouc selon l'invention peut comporter également tout ou partie des additifs usuels habituellement utilisés dans les compositions d'élastomères destinées à la fabrication de pneumatiques, en particulier de bandes de roulement, comme par exemple des plastifiants ou des huiles d'extension, que ces derniers soient de nature aromatique ou non-aromatique, des pigments, des agents de protection tels que cires anti-ozone (telle que la Cire Ozone C32 ST), anti-ozonants chimiques, anti-oxydants (tel que la 6-paraphénylènediamine), des agents anti-fatigue, des résines renforçantes, des accepteurs (par exemple résine phénolique novolaque) ou des donneurs de méthylène (par exemple HMT ou H3M) tels que décrits par exemple dans la demande WO 02/10269, des promoteurs d'adhésion (sels de Cobalt par exemple).

De préférence, la composition selon l'invention comporte, à titre d'agent plastifiant préférentiel non aromatique ou très faiblement aromatique, au moins un composé choisi dans le groupe constitué par les huiles naphténiques, paraffiniques, huiles MES, huiles TDAE, les esters (en particulier trioléates) de glycérol, les résines plastifiantes hydrocarbonées présentant une haute Tg de préférence supérieure à 30°C, et les mélanges de tels composés.

La composition selon l'invention peut également contenir, en complément des agents de couplage, des activateurs de couplage de la charge inorganique renforçante ou plus généralement des agents d'aide à la mise en oeuvre susceptibles de manière connue, grâce à une amélioration de la dispersion de la charge inorganique dans la matrice de caoutchouc et à un abaissement de la viscosité des compositions, d'améliorer leur faculté de mise en oeuvre à l'état cru.

Un autre objet de l'invention est le procédé de préparation de la composition de caoutchouc décrite ci-dessus.

La composition de caoutchouc selon l'invention est fabriquée dans des mélangeurs appropriés, en utilisant deux phases de préparation successives selon une procédure générale bien connue de l'homme du métier : une première phase de travail ou malaxage thermo-mécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de réticulation chimique.

De manière générale, tous les constituants de base de la composition comprise dans le pneumatique de l'invention, à l'exception du système de réticulation chimique, à savoir la ou les charges renforçantes, l'agent de couplage le cas échéant, sont incorporés de manière intime, par malaxage, à l'élastomère diénique ou aux élastomères diéniques au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre la température maximale comprise entre 130°C et 200°C, de préférence comprise entre 145°C et 185°C.

Selon un premier mode de réalisation de l'invention, l'élastomère diénique a été greffé par l'agent de modification préalablement à la fabrication de la composition de caoutchouc. Ainsi, dans ce cas, c'est l'élastomère diénique greffé qui est introduit au cours de la première phase dite non-productive. Ainsi selon ce premier mode de réalisation du procédé, celui-ci comprend les étapes suivantes:
- modifier l'élastomère diénique en post-polymérisation ou en solution ou en masse par greffage d'un agent de modification comprenant au moins un groupement Q, et au moins un groupement A reliés entre eux par au moins et de préférence un groupement « espaceur » Sp tel que décrit plus haut,
- incorporer à l'élastomère diénique ainsi greffé par l'agent de modification, la charge renforçante et tous les constituants de base de la composition, à l'exception du système de réticulation chimique, en malaxant thermomécaniquement le tout, en une ou plusieurs fois, jusqu'à atteindre une température maximale comprise entre 130°C et 200°C, de préférence entre 145°C et 185°C.
- refroidir l'ensemble à une température inférieure à 100°C,
- incorporer ensuite l'agent de réticulation chimique,
- malaxer le tout jusqu'à une température maximale inférieure à 120°C,
- extruder ou calandrer la composition de caoutchouc ainsi obtenue.

Selon un second mode de réalisation de l'invention, le greffage de l'élastomère diénique par l'agent de modification est effectué concomitamment à la fabrication de la composition de caoutchouc. Dans ce cas, tant l'élastomère diénique non encore greffé que l'agent de modification sont introduits au cours de la première phase dite non-productive. De manière préférentielle, la charge renforçante est alors ajoutée subséquemment au cours de cette même phase non-productive afin de prévenir toute réaction parasite avec l'agent de modification.

Ainsi, selon ce deuxième mode de réalisation du procédé, celui-ci comprend les étapes suivantes:
- incorporer à l'élastomère diénique, un agent de modification comprenant au moins un groupement Q, et au moins un groupement A reliés entre eux par au moins et de préférence un groupement « espaceur » Sp, tel que décrit plus haut, à une température et pendant une durée telle que le rendement de greffage soit de préférence supérieur à 60%, plus préférentiellement supérieur à 80%, et, de préférence subséquemment, la charge renforçante, ainsi que tous les constituants de base de la composition, à l'exception du système de réticulation chimique, en malaxant thermomécaniquement le tout, en une ou plusieurs fois, jusqu'à atteindre une température maximale comprise entre 130°C et 200°C, de préférence entre 145°C et 185°C.
- refroidir l'ensemble à une température inférieure à 100°C,
- incorporer ensuite l'agent de réticulation chimique,
- malaxer le tout jusqu'à une température maximale inférieure à 120°C,
- extruder ou calandrer la composition de caoutchouc ainsi obtenue.

Le greffage de l'élastomère se fait par réaction dudit élastomère avec le ou les groupes réactifs portés par l'agent de modification. Lors de cette réaction, ce ou ces groupes réactifs forment des liaisons covalentes avec la chaîne de l'élastomère.

Le greffage de l'agent de modification peut être réalisé en masse, par exemple dans un mélangeur interne ou un mélangeur externe tel qu'un mélangeur à cylindres. Le greffage est alors mis en oeuvre soit à une température du mélangeur externe ou du mélangeur interne inférieure à 60°C, suivi d'une étape de réaction de greffage sous presse ou en étuve à des températures allant de 80°C à 200°C, soit à une température du mélangeur externe ou du mélangeur interne supérieure à 60°C sans traitement thermique postérieur.

Le procédé de greffage peut également être effectué en solution en continu ou en discontinu. Le polymère ainsi modifié peut être séparé de sa solution par tout type de moyen connu par l'homme de l'art et en particulier par une opération de stripping à la vapeur d'eau.

Le greffage de l'agent de modification est effectué par cycloaddition [3+2] du ou des groupes réactifs de l'agent de modification et une ou plusieurs doubles liaisons de la chaîne du polymère. Le mécanisme de la cycloaddition peut être illustré par les équations suivantes:
- Cycloaddition d'un oxyde de nitrile sur une insaturation ou double liaison du polymère (ici un polyisoprène) 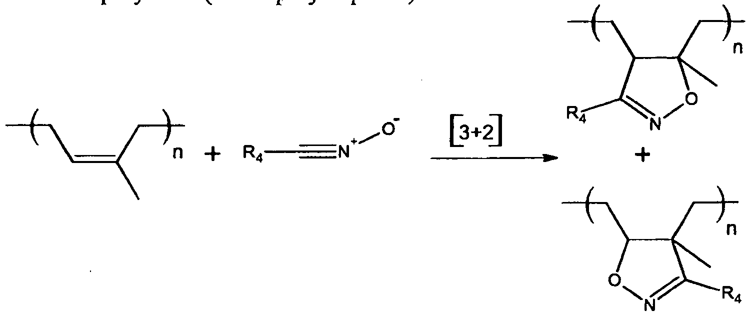
- Cycloaddition d'une nitrone sur une insaturation ou double liaison du polymère (ici un polyisoprène) 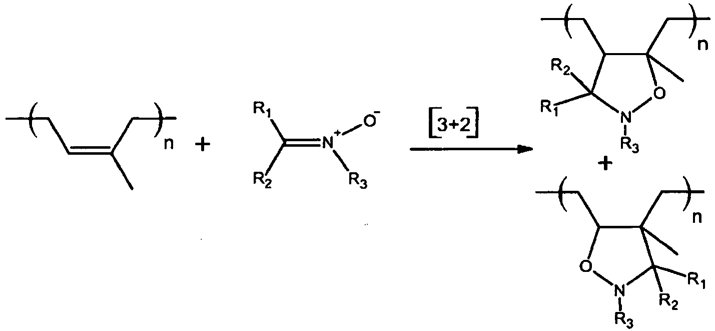
- Cycloaddition d'un nitrile imine sur une insaturation ou double liaison du polymère (ici un polyisoprène)

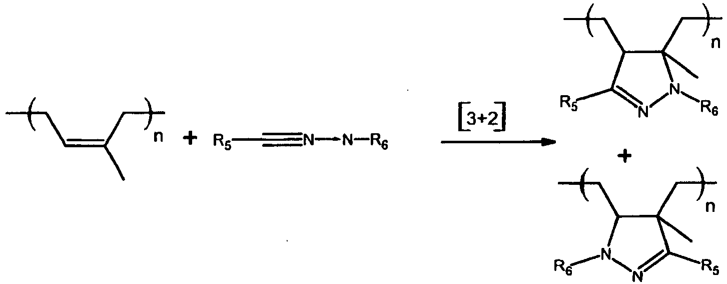

A titre d'exemple, la première phase (non-productive) est conduite en une seule étape thermomécanique au cours de laquelle on introduit, dans un mélangeur approprié tel qu'un mélangeur interne usuel, tous les constituants nécessaires, les éventuels agents de mise en oeuvre complémentaires et autres additifs divers, à l'exception du système de réticulation chimique. La durée totale du malaxage, dans cette phase non-productive, est de préférence comprise entre 1 et 15 min. Après refroidissement du mélange ainsi obtenu au cours de la première phase non-productive, on incorpore alors le système de réticulation chimique à basse température, généralement dans un mélangeur externe tel qu'un mélangeur à cylindres; le tout est alors mélangé (phase productive) pendant quelques minutes, par exemple entre 2 et 15 min.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable comme semi-fini de pneumatique pour véhicule.

L'invention ainsi que ses avantages seront aisément compris à la lumière des exemples de réalisation qui suivent.

### EXEMPLES DE REALISATION

### I. Mesures et tests utilisés

Les élastomères et compositions de caoutchouc sont caractérisés, avant et après cuisson, comme indiqué ci-après.

### Détermination du taux d'agent de modification

La détermination du taux molaire de composé oxyde de nitrile greffé est réalisée par une analyse RMN. Les spectres sont acquis sur un spectromètre 500 MHz BRUKER équipé d'une sonde " large bande " BBIz-grad 5 mm. L'expérience RMN ¹H quantitative, utilise une séquence simple impulsion 30° et un délai de répétition de 3 secondes entre chaque acquisition. Les échantillons sont solubilisés dans le sulfure de carbone (CS2). 100 µL de cyclohexane deutéré (C6D12) sont ajoutés pour le signal de lock.

Le spectre RMN ¹H permet de quantifier les motifs nitriloxide greffés par intégration des signaux caractéristiques des protons CH2N et CH2O qui apparaissent à un déplacement chimique compris entre δ=3.1-3,8ppm

Le spectre RMN 2D HSQC ¹H-¹³C permet de vérifier la nature du motif greffé grâce aux déplacements chimiques des atomes de carbone et de proton.

### Température de transition vitreuse

Les températures de transition vitreuse Tg des polymères sont mesurées au moyen d'un calorimètre différentiel (" differential scanning calorimeter "). L'analyse est réalisée selon les requis de la nonne ASTM D3418-08.

### Spectroscopie proche infrarouge (NIR)

La spectroscopie proche infrarouge (NIR) est utilisée pour déterminer quantitativement le taux massique de styrène dans l'élastomère ainsi que sa microstructure (répartition relative des unités butadiene 1,2-vinyl, 1,4-trans et 1,4 cis). Le principe de la méthode repose sur la loi de Beer-Lambert généralisée à un système multicomposants. La méthode étant indirecte, elle fait appel à un étalonnage multivarié [Vilmin, F.; Dussap, C.; Coste, N. Applied Spectroscopy 2006, 60, 619-29] réalisé à l'aide d'élastomères étalons de composition déterminée par RMN ¹³C. Le taux de styrène et la microstructure sont alors calculés à partir du spectre NIR d'un film d'élastomère d'environ 730 µm d'épaisseur. L'acquisition du spectre est réalisée en mode transmission entre 4000 et 6200 cm⁻¹ avec une résolution de 2 cm⁻¹, à l'aide d'un spectromètre proche infrarouge à transformée de Fourier Bruker Tensor 37 équipé d'un détecteur InGaAs refroidi par effet Peltier.

### Chromatographie d'exclusion stérique

On utilise la chromatographie d'exclusion stérique ou SEC (Size Exclusion Chromatography). La SEC permet de séparer les macromolécules en solution suivant leur taille à travers des colonnes remplies d'un gel poreux. Les macromolécules sont séparées suivant leur volume hydrodynamique, les plus volumineuses étant éluées en premier.

Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité (Ip = Mw/Mn) calculé via un étalonnage dit de MOORE.

Préparation du polymère: Il n'y a pas de traitement particulier de l'échantillon de polymère avant analyse. Celui-ci est simplement solubilisé, dans du (tétrahydrofuranne + 1%vol. de diisopropylamine + 1%vol. de triéthylamine + 1%vol. d'eau distillée) ou dans du chloroforme, à une concentration d'environ 1 g/l. Puis la solution est filtrée sur filtre de porosité 0,45µm avant injection.

Analyse SEC: L'appareillage utilisé est un chromatographe « WATERS alliance ». Le solvant d'élution est du tétrahydrofuranne + 1%vol. de diisopropylamine + 1%vol. de triéthylamine ou du chloroforme selon le solvant utilisé pour la mise en solution du polymère. Le débit est de 0,7 ml/min, la température du système de 35°C et la durée d'analyse de 90 min. On utilise un jeu de quatre colonnes WATERS en série, de dénominations commerciales « STYRAGEL HMW7 », « STYRAGEL HMW6E » et deux « STYRAGEL HT6E ».

Le volume injecté de la solution de l'échantillon de polymère est 100 µl. Le détecteur est un réfractomètre différentiel « WATERS 2410 » et le logiciel d'exploitation des données chromatographiques est le système « WATERS EMPOWER».

Les masses molaires moyennes calculées sont relatives à une courbe d'étalonnage réalisée à partir de polystyrènes étalons commerciaux « PSS READY CAL-KIT ».

### Essais de traction

Ces essais de traction permettent de déterminer les contraintes d'élasticité et les propriétés à la rupture. Sauf indication différente, ils sont effectués conformément à la norme française NF T 46-002 de septembre 1988. Un traitement des enregistrements de traction permet également de tracer la courbe de module en fonction de l'allongement. Le module utilisé ici étant le module sécant nominal (ou apparent) mesuré en première élongation, calculé en se ramenant à la section initiale de l'éprouvette. On mesure en première élongation les modules sécants nominaux (ou contraintes apparentes, en MPa) à 100% et 300% d'allongement notés respectivement MSA100 et MSA300.

Les contraintes à la rupture (en MPa) et les allongements à la rupture (en %) sont mesurés à 23°C ± 2°C et à 100°C ± 2°C, selon la norme NF T 46-002.

### Propriétés dynamiques

Les propriétés dynamiques ΔG* et tan(δ)max sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, dans les conditions normales de température (23°C) selon la norme ASTM D 1349-99, ou selon les cas à une température différente (100°C). On effectue un balayage en amplitude de déformation de 0,1% à 100% (cycle aller), puis de 100% à 0,1% (cycle retour). Les résultats exploités sont le module complexe de cisaillement dynamique (G*) et le facteur de perte tan(δ). Pour le cycle retour, on indique la valeur maximale de tan(δ) observée, noté tan(δ)max, ainsi que l'écart de module complexe (ΔG*) entre les valeurs à 0,1% et à 100% de déformation (effet Payne).

### II. Exemples de compositions

### II-1. Préparation de l'agent de modification

### a) Préparation du 1-(2-(3'-nitrileoxymesityl-1'-oxy)ethyl)imidazolidin-2-one

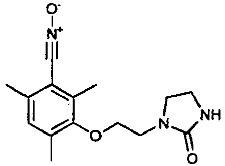

Ce composé peut être préparé à partir du mésitol de l'hydroxyethylimidazolidone selon le schéma synthétique suivant.

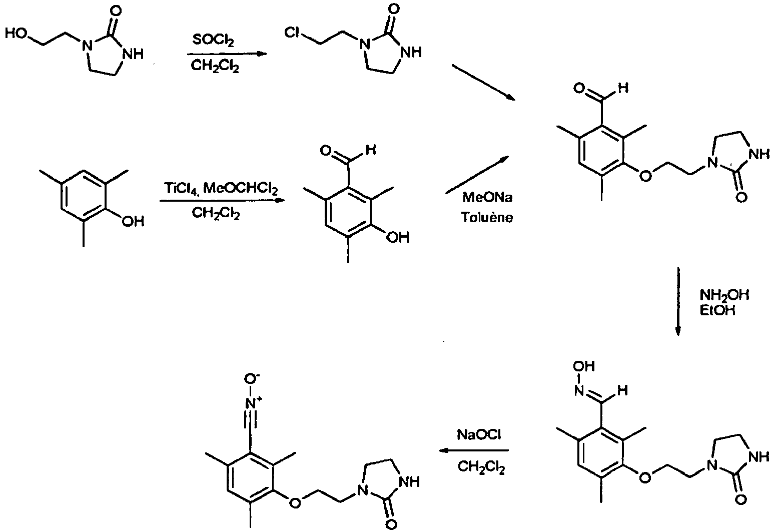

### b) Préparation du 3-hydroxy-2,4,6-trimethylbenzaldehyde

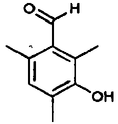

Ce composé peut être obtenu selon une procédure décrite dans l'article suivant : Yakubov, A. P.; Tsyganov, D. V.; Belen'kii, L. I.; Krayushkin, M. M.; Bulletin of the Academy of Sciences of the USSR, Division of Chemical Science (English Translation); vol. 40; nb. 7.2; (1991); p. 1427 - 1432; Izvestiya Akademii Nauk SSSR, Seriya Khimicheskaya; nb. 7; (1991); p. 1609 - 1615.

### c) Réparation de la 1-(2-chloroethyl)imidazolidin-2-one :

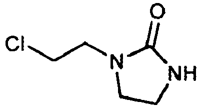

Ce produit est décrit dans l'article Nagarajan K., Arya V. P., Shah R. K.; Indian Journal of Chemistry, Section B: Organic Chemistry Including Medicinal Chemistry; 21; 10; 1982; 928-940.

A une solution de 1-(2-hydroxyethyl)imidazolidin-2-one (50,0 g, 0,39 mol) dans le dichlorométhane (250 mL) est ajouté goutte à goutte, à température ambiante, le chlorure de thionyle (34 mL, 0,47 mol) pendant 35 minutes. A la fin de l'addition la température du milieu réactionnel est de 35°C. Le milieu réactionnel est maintenu à une température de 35-40°C pendant 2.5 heures. Après évaporation sous pression réduite (Tbain 35 °C, 15-17 mbar) le produit brut est obtenu (67 g). Ce brut est cristallisé dans un mélange d'acétone et d'éther de pétrole (35 g pour 950 mL d'acétone et 820 mL d'éther de pétrole à - 24 °C pendant 10 à 15 heures). Les cristaux sont filtrés, lavés par de l'éther de pétrole (2 fois par 40 mL) puis séchés pendant 10 à 15 heures sous pression atmosphérique à température ambiante.

Un solide blanc (33,3 g, rendement 66 %) de point de fusion 93 °C est obtenu.

La pureté molaire est supérieure à 97 % (RMN ¹H).

Une caractérisation RMN ¹H et ¹³C est présentée dans le tableau 1 suivant.

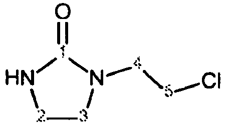

**Tableau 1**

| Atome | δ ¹H (ppm) + mult. | δ ¹³C (ppm) |
|---|---|---|
| 1 | - | 162.1 |
| 2 | 3.17 (t) | 37.5 |
| 3 | 3.33 (t) | 44.7 |
| 4 | 3.29 (t) | 45.0 |
| 5 | 3.62 (t) | 42.4 |

Solvant utilisé : DMSO - Calibration sur le signal du DMSO à 2.44 ppm en ¹H, 39.5 ppm en ¹³C.

### d) Préparation de 2,4,6-trimethyl-3-(2-(2-oxoimidazolidin-1-ylethoxy)benzaldehyde :

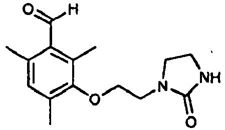

A une solution de sodium (1.63 g, 0.071 mol.) dans le méthanol (60 mL) est ajouté goutte à goutte le 3-hydroxy-2,4,6-trimethylbenzaldehyde (11.90 g, 0.073 mol.) dans le toluène anhydre (300 mL). Le mélange est porté au reflux puis le méthanol est distillé (volume de mélange azéotropique recueilli 80-90 mL). Après retour à 80-90 °C, la (2-chloroethyl)imidazolidin-2-one (10.45 g, 0,070 mol) est ajoutée en une fois au milieu réactionnel. Après 7 heures de reflux, les solvants sont évaporés sous pression réduite (Tbain 50 °C, 25 mbar). Au mélange obtenu est ajoutée du dichloromethane (150 mL) et de l'eau (30 mL). La phase organique est lavée ensuite 2 fois à l'eau (20 mL). Après séchage sur Na2SO4, le dichlorométhane est évaporé sous pression réduite (Tbain 35 °C, 33 mbar). Au mélange obtenu (24 g) est ajoutée de l'éther de pétrole (3 fois par 50 mL) et de l'eau (50 mL) et le précipite obtenu est filtré et lavé sur le filtre par de l'eau (15 mL) et de l'éther de pétrole (2 fois par 15 mL).

Le produit obtenu est repurifié par un lavage du produit en solution dans le dichlorométhane (80 mL) par une solution de NaOH à 4% dans l'eau (3 fois par 60 mL). Après évaporation des solvants sous pression réduite, le produit est précipité dans de l'éther de pétrole. Le précipité est filtré et séché pendant 15 à 20 heures sous pression atmosphérique à température ambiante.

Un solide blanc (8,55 g, rendement 44 %) de point de fusion 139 °C est obtenu.

La pureté molaire est supérieure à 94 % (RMN ¹H).

Une caractérisation RMN ¹H et ¹³C est présentée dans le tableau 2 suivant.

| |
|---|
| 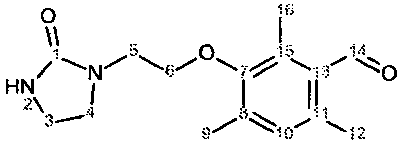 |

**Tableau 2**

| Atome | δ ¹H (ppm) + mult. | δ ¹³C (ppm) |
|---|---|---|
| 1 | - | 163.1 |
| 2 | ∼ 4.74 (s) | - |
| 3 | 3.40 (t) | 38.1 |
| 4 | 3.65 (t) | 46.8 |
| 5 | 3.52 (t) | 43.9 |
| 6 | 3.79 (t) | 71.3 |
| 7 | - | 153.9 |
| 8 | - | * |
| 2 | 2.23/2.46 (s) | 16.5/19.8 |
| 10 | 6.84 | 131.7 |
| 11 | - | * |
| 12 | 2.23/2.46 (s) | 16.5/19.8 |
| 13 | - | * |
| 14 | ~ 10.46 (s) | 193.0 |
| 15 | - | * |
| 16 | 2.46 (s) | 12.1 |

| | | |
|---|---|---|
| * 131.4/133.5/136.6/136.7 ppm : Les déplacements chimiques des ¹³C du cycle aromatique ne sont pas attribués. | | |

Solvant utilisé : CDCl₃ - Calibration sur le signal du chloroforme à 7.2 ppm en ¹H, 77 ppm en ¹³C.

### e) Réparation du 2,4,6-trimethyl-3-(2-(2-oxoimidazolidin-1-yl)ethoxy)benzaldehyde oxime :

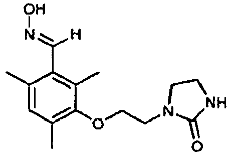

A une solution de 2,4,6-trimethyl-3-(2-(2-oxoimidazolidin-1-yl)ethoxy)benzaldehyde (7,90 g, 0,029 mol) dans l'éthanol (70 mL) maintenue à une température de 45°C est ajoutée une solution d'hydroxylamine aqueuse (2,83 g, 0,043 mol., 50 % dans l'eau) dans l'éthanol (10 mL). Le milieu réactionnel est ensuite agité pendant 2.5 heures à une température comprise entre 50 et 55°C. Le solvant est évaporé sous pression réduite (Tbain 37 °C, 35 mbar). Au brut obtenu est ajouté de l'éther de pétrole (80 mL). Le précipité obtenu est filtré, lavé par de l'éther de pétrole (2 fois par 20 mL) et séché pendant 15 à 20 heures sous pression atmosphérique à température ambiante.

Un solide blanc (7,82 g, rendement 94 %) de point de fusion 165 °C est obtenu.

La pureté molaire est supérieure à 84 % (les 16 % restants comprennent notamment 7 % mol. d'EtOH) d'après la RMN ¹H.

Une caractérisation RMN ¹H et ¹³C est présentée dans le tableau 3 suivant.

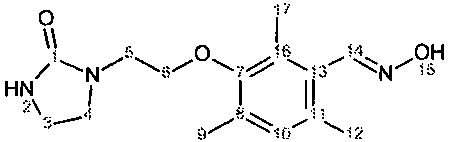

**Tableau 3**

| Atome | δ ¹H (ppm) + mult. | δ ¹³C (ppm) |
|---|---|---|
| 1 | - | 162.0 |
| 2 | ~ 6.30(s) | - |
| 3 | 3.19 (t) | 37.1 |
| 4 | 3.44 (t) | 45.5 |
| 5 | 3.34 (t) | 43.2 |
| 6 | 3.69 (t) | 70.3 |
| 7 | - | 153.5 |
| 8 | - | * |
| 9 | 2.14 (s) | 15.4 |
| 10 | - | 130.5 |
| 11 | - | * |
| 12 | 2.18 (s) | 19.9 |
| 13 | - | * |
| 14 | ~ 8.20 (s) | 147.4 |
| 15 | ~ 11.10 (s) | - |
| 16 | - | * |
| 17 | 2.17 (s) | 12.9 |

| | | |
|---|---|---|
| * 129.3/129.5/131.9 ppm : Les déplacements chimiques des ¹³C du cycle aromatique ne sont pas attribués, trois signaux sont détectés (probablement deux carbones sous un même signal). | | |

Solvant utilisé : DMSO - Calibration sur le signal du DMSO à 2.44 ppm en ¹H, 39.5 ppm en ¹³C.

### f) Préparation de 2,4,6-trimethyl-3-(2-(2-oxoimidazolidin-1-yl)ethoxy) nitriloxide, composé selon l'invention :

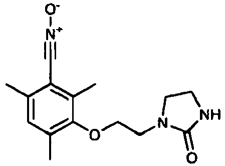

A une solution d'oxime précédemment préparée (6,00 g, 0,021 mol) dans le dichlorométhane (250 mL), à la température de 2°C, est ajoutée goutte à goutte une solution aqueuse de NaOCl (4 % de chlore actif, 52 mL) pendant 5-7 minutes. La température du milieu réactionnel est maintenue entre 0 et - 4°C. Le milieu réactionnel est ensuite agité pendant 3 heures à une température comprise entre 0 et 5°C. La phase organique est alors séparée. La phase aqueuse est extraite par du dichlorométhane (2 fois par 15 mL). Les phases organiques sont rassemblées puis lavées à l'eau (2 fois par 20 mL), séchées par Na2SO4. Le volume de solvant est réduit par évaporation sous pression réduite (Tbain 22 °C, 220 mbar) jusqu'à 50-60 mL. De l'éther de pétrole (75 mL) est alors ajouté et la solution est placée à -18°C pendant 10-15 heures. Le précipité obtenu est filtré et lavé par un mélange acétate d'éthyle / éther de pétrole (1/2) (10 mL) et enfin séché pendant 10-15 heures sous pression atmosphérique à température ambiante.

Un solide blanc (4,70 g, rendement 79 %) de point de fusion 156 °C est obtenu.

La pureté molaire est supérieure à 85 % (RMN ¹H).

Une caractérisation RMN ¹H et ¹³C est présentée dans le tableau 4 suivant.

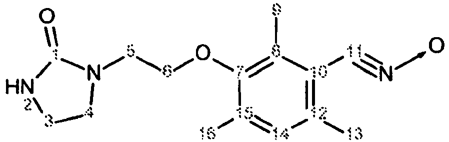

**Tableau 4**

| Atome | δ ¹H (ppm) + mult. | δ ¹³C (ppm) |
|---|---|---|
| 1 | - | Non détecté, non attribué |
| 2 | ~ 4.59 (s) | - |
| 3 | 3.41 (t) | 38.3 |
| 4 | 3.64 (t) | 47.0 |
| 5 | 3.51 (t) | 44.1 |
| 6 | 3.79 (t) | 71.5 |
| 7 | - | 153.6 |
| 8 | - | 134.4/137.3* |
| 9 | 2.32 (s) | 14.8 |
| 10 | - | 112.8 |
| 11 | - | Non détecté, non attribué |
| 12 | - | 134.4/137.3* |
| 13 | 2.31 (s) | 20.2 |
| 14 | 6.85 (s) | 130.3 |
| 15 | - | 134.4/137.3* |
| 16 | 2.20 (s) | 16.4 |

| | | |
|---|---|---|
| * Les carbones aromatiques 8, 12 et 15 ne sont pas attribués. On observe deux signaux en RMN ¹³C, on a probablement deux carbones qui sortent sous le même signal. | | |

La fonction -C≡N→O présente une bande 1R caractéristique à 2295 cm⁻¹
Solvant utilisé : CDCl₃ - Calibration sur le signal du chloroforme à 7.2 ppm en ¹H, 77 ppm en ¹³C.

### II-2. Préparation de l'élastomère greffé

### II-2.1- Greffage de l'agent de modification sur un SBR en masse

On utilise l'agent de modification obtenu précédemment.

On incorpore du 2,4,6-trimethyl-3-(2-(2-oxoimidazolidin-1-yl)ethoxy) (2,72 g), de pureté RMN de 86%mol, à 30g de SBR (contenant 26% en poids de styrène et 24% en poids d'unité butadiène-1,2 et de Mn = 162 900 g/mol et Ip = 1,15) sur outil à cylindres (mélangeur externe à 30°C). ). Le mélange est homogénéisé en 15 passes portefeuille.

Cette phase de mélangeage est suivie d'un traitement thermique sous presse à 10 bars de pression.

Les durées et les températures de cette seconde étape ont été modulées. L'analyse par RMN ¹H a permis de déterminer le taux molaire de greffage et le rendement molaire de greffage qui sont reportés dans le tableau 5 suivant:

| temps | Température | taux RMN (% mol) | rendement |
|---|---|---|---|
| 5min | 110°C | 1.55 | 90% |
| 10min | 110°C | 1.55 | 90% |
| 5min | 150°C | 1.55 | 90% |
| 10min | 150°C | 1.54 | 90% |

### II-2.2 - Greffage de l'agent de modification sur un SBR en solution

2 g de SBR (contenant 26% en poids de styrène et 24% en poids d'unité butadiène-1,2 et de Mn = 162 900 g/mol et Ip = 1,15) sont remis en solution dans 50 mL de dichlorométhane. Une solution de 60 mg de 2,4,6-trimethyl-3-(2-(2-oxoimidazolidin-1-yl)ethoxy) nitriloxide d'une pureté ¹H RMN de 86% mol dans 5 mL de dichlorométhane est ajoutée à la solution de polymère et le milieu réactionnel est agité pendant 24 h au reflux du dichlorométhane.

Le polymère est ensuite coagulé dans un mélange acétone/méthanol. Le polymère est remis en solution dans du toluène puis soumis à un traitement antioxydant par addition de 4 mg de 4,4'-methylène-bis-2,6-tert-butylphenol et 4 mg de N-(1,3-dimethylbutyl)-N'-phényl-p-phénylènediamine. Le polymère est séché sous vide pendant 48h à 60 °C.

L'analyse par RMN ¹H indique que le polymère a été modifié à hauteur de 1 % molaire ce qui équivaut encore à un rendement molaire de greffage de 67 %.

### II-2.3 - Greffage de l'agent de modification sur le polyisoprène Natsyn 2200 (Goodyear)

On utilise le même agent de modification que celui précédemment obtenu.

On incorpore 2.85g de 2,4,6-trimethyl-3-(2-(2-oxoimidazolidin-1-yl)ethoxy), de pureté RMN de 86%mol, à 30g de Natsyn 2200 [ML(1+4) 100°C = 79, unités 3,4= 0.5%, unités trans 1,4= 1.9%, unité cis 1,4= 97,6%, Mw = 1044.103 g/mol, Ip = 3.6] ) sur outil à cylindres (mélangeur externe à 30°C). Le mélange est homogénéisé en 15 passes portefeuille.

Cette phase de mélangeage est suivie d'un traitement thermique sous presse à 10 bar de pression.

Les durées et les températures de cette seconde étape ont été modulées. L'analyse par RMN ¹H a permis de déterminer le taux molaire de greffage et le rendement molaire de greffage qui sont reportés dans le tableau 6 suivant:

| temps | Température | taux RMN (% mol) | rendement |
|---|---|---|---|
| 5min | 130°C | 1.52 | 88% |
| 10min | 130°C | 1.55 | 90% |
| 5min | 150°C | 1.54 | 90% |
| 10min | 150°C | 1.58 | 92% |

### II-3. Préparation des compositions

On procède pour les essais qui suivent de la manière suivante: on introduit dans un mélangeur interne Polylab de 85cm³, rempli à 70% et dont la température initiale de cuve est d'environ 110°C, le ou les élastomères diéniques non greffés. Pour les mélanges concernant l'invention, l'agent de modification est introduit en même temps que l'élastomère diénique et est conduit un travail thermomécanique de 1 min) à 25°C, en mélangeant le tout (phase productive) pendant environ 5 à 6 min.

Ensuite, pour toutes les compositions (témoins et de l'invention) la ou les charges renforçantes éventuelles, l'agent de couplage éventuel puis, après une à deux minutes de malaxage, les divers autres ingrédients à l'exception du système de vulcanisation sont introduits. On conduit alors un travail thermomécanique (phase non-productive) en une étape (durée totale du malaxage égale à environ 5 min), jusqu'à atteindre une température maximale de "tombée" de 160°C. On récupère le mélange ainsi obtenu, on le refroidit puis on ajoute le système de vulcanisation (soufre) sur un mélangeur externe (homo-finisseur) à 25°C, en mélangeant le tout (phase productive) pendant environ 5 à 6 min.

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit sous la forme de profilés utilisables directement, après découpage et/ou assemblage aux dimensions souhaitées, par exemple comme produits semi-finis pour pneumatiques, en particulier comme bandes de roulement de pneumatiques.

### II-3.1 - Compositions à base de noir de carbone

Les compositions de caoutchouc sont données dans le tableau 7. Les quantités sont exprimées en parties pour 100 parties en poids d'élastomère (pce).

**Tableau 7:**

| Composition | Composition témoin | Composition SBR1 | Composition SBR2 |
|---|---|---|---|
| SBR (1) | 100 | 100 | 100 |
| Noir de carbone (2) | 50 | 50 | 50 |
| Agent de modification (3) | | 0.9 | 4.5 |
| ZnO (4) | 2 | 2 | 2 |
| Acide stéarique (5) | 2.7 | 2.7 | 2.7 |
| Soufre | 1.2 | 1.2 | 1.2 |
| CBS (6) | 1.9 | 1.9 | 1.9 |

| | | | |
|---|---|---|---|
| *(1) SBR préparé par polymérisation anionique (contenant 26% en poids de styrène et 24% en poids d'unité butadiène-1,2 et de Mn = 162 900 g*/*mol et Ip = 1, 15).* *(2)* Noir de carbone N234 *(3) agent de modification : 2,4,6-trimethyl-3-(2-(2-oxoimidazolidin-1-yl)ethoxy) nitriloxide* *(4) oxyde de zinc (grade industriel - société Umicore) ;* *(5) Stéarine ("Pristerene 4931"- société Uniqema) ;* *(6) CBS : N-cyclohexyl-2-benzothiazyl-sulfénamide (« Santocure CBS » de la société Flexsys)* | | | |

### Essais de caractérisation - Résultats

L'objet de cet exemple est de comparer les propriétés de compositions de caoutchouc à base de noir de carbone selon l'invention comprenant un élastomère SBR greffé (compositions 1 et 2) à une composition comparative comprenant le même élastomère SBR non greffé (composition témoin).

Les résultats sont reportés dans le tableau 8.

**Tableau 8**

| **Composition** | Composition témoin | Composition SBR 1 | Composition SBR 2 |
|---|---|---|---|
| **Propriétés mécaniques à l'état réticulé :** | | | |
| **Propriétés force-allongement à 23°C** | | | |
| Allongement rupture (%) | 448 | 411 | 368 |
| Contrainte rupture (MPa) | 26.5 | 28.0 | 28.4 |
| MSA100% | 2.97 | 3.43 | 3.69 |
| MSA300% | 5.20 | 6.26 | 7.24 |
| MSA300/MSA100 | 1.75 | 1.83 | 1.96 |
| | | | |

| **Propriétés force-allongement à 100°C** | | | |
|---|---|---|---|
| Allongement rupture (%) | 274 | 290 | 274 |
| Contrainte rupture (MPa) | 11.3 | 14.1 | 14.3 |
| MSA100% | 2.75 | 2.93 | 2.85 |
| MSA300% | NM | NM | NM |
| MSA300/MSA100 | NM | NM | NM |
| | | | |

| **Propriétés dynamiques en fonction de la déformation** | | | |
|---|---|---|---|
| G* _{(25%)} (MPa) 23°C | 2.74 | 2.68 | 2.36 |
| Δ G* _{(100%-0.1%)} 23°C (MPa) | 4.55 | 2.67 | 2.19 |
| Tan(δ)max (23°C) | 0.28 | 0.21 | 0.21 |
| G* _{(25%)} (MPa) 100°C | 1.83 | 2.09 | 1.81 |
| ΔG* _{(100%-0.1%)} 100°C (MPa) | 1.8 | 1.12 | 0.61 |
| Tan(δ)max (100°C) | 0.17 | 0.14 | 0.12 |

| | | | |
|---|---|---|---|
| NM : non mesurable | | | |

Les compositions SBR1 et SBR2 présentent à 23°C et à 100°C des fortes diminutions d'effet Payne vues au travers de la diminution d'hystérèse (tan δ max) au cours d'un balayage en déformation à contrainte imposée. Cette diminution d'hystérèse est associée par l'homme de l'art à une amélioration de la résistance au roulement.

De manière inattendue, il est remarquable de constater que cette augmentation de rigidité à 100°C n'est pas accompagnée d'une déchéance en allongement rupture. En effet, l'homme de l'art sait que lorsqu'il augmente la densité de réticulation et/ou la densité de liaison gomme/charge, une diminution de l'allongement rupture est observée.

On constate donc que les compositions de caoutchouc conformes à l'invention à base de noir de carbone et comprenant un élastomère greffé, présentent des modules MSA élevés tout en augmentant significativement les propriétés à la rupture et en baissant également très fortement l'hystérèse de la composition.

### II-3.2 -Compositions à base de silice

Les compositions de caoutchouc sont données dans le tableau 9. Les quantités sont exprimées en parties pour 100 parties en poids d'élastomère (pce).

**Tableau 9**

| | Composition témoin | Composition SBR3 |
|---|---|---|
| SBR (1) | 100 | 100 |
| Noir de carbone (2) | 3 | 3 |
| Silice (3) | 55 | 55 |
| Agent de modification (4) | | 4.25 |
| Agent de couplage (5) | 5.5 | 5.5 |
| 6PPD (6) | 1.5 | 1.5 |
| TMQ (7) | 1 | 1 |
| paraffine | 1 | 1 |
| ZnO (8) | 2.7 | 2.7 |
| acide stéarique (9) | 2.5 | 2.5 |
| Soufre | 1.5 | 1.5 |
| CBS (10) | 1.8 | 1.8 |

| | | |
|---|---|---|
| *(1) SBR préparé par polymérisation anionique (contenant 26% en poids de styrène et 24% en poids d'unité butadiène-1,2 et de Mn = 161900 g*/*mol et Ip = 1,15).* *(2) Noir de carbone N234* *(3) silice "ZEOSIL 1165 MP" de la société Rhodia sous forme de microperles (BET et CTAB : environ 150-160 m2*/*g) ;* *(4) 2,4,6-trimethyl-3-(2-(2-oxoimidazolidin-1-yl)ethoxy) nitriloiride* *(5) TESPT ("SI69" de la société Degussa) ;* *(6) N-1,3-diméthylbutyl-N-phényl-para-phénylènediamine ("Santoflex 6-PPD" de la société Flersys) ;* *(7) 2,2,4-trimethyl-1,2- dihydroquinoline* *(8) oxyde de zinc (grade industriel - société Umicore)* *(9) stéarine ("Pristerene 4931"- société Uniqema) ;* *(10) CBS : N-cyclohexyl-2-benzothiazyl-suffénamide ("Santoeure CBS " de la société Flexsys)* | | |

### Essais de caractérisation - Résultats

L'objet de cet exemple est de comparer les propriétés d'une composition de caoutchouc à base de silice selon l'invention comprenant un élastomère SBR greffé (composition 3) à une composition comparative comprenant le même élastomère SBR non greffé (composition témoin). Les résultats sont reportés dans le tableau 10.

**Tableau 10**

| | Composition témoin | Composition SBR 3 |
|---|---|---|
| **Propriétés mécaniques à l'état réticulé :** | | |
| **propriétés force-allongement à 23°C** | | |
| Allongement rupture (%) | 390 | 384 |
| Contrainte rupture (MPa) | 25.1 | 33.7 |
| MSA100% | 3.31 | 3.49 |
| MSA300% | 4.68 | 6.44 |
| MSA300/MSA100 | 1.41 | 1.85 |

| **Propriétés dynamiques en fonction de la déformation** | | |
|---|---|---|
| G* _{(25%)} (MPa) 23°C | 2.96 | 2.99 |
| Δ G* _{(100%-0.1%)} 23°C (MPa) | 4.03 | 1.52 |
| Tan(δ)max 23°C | 0.22 | 0.15 |

La composition SBR3 présente à 23°C une forte diminution d'effet Payne vue au travers de la diminution d'hystérèse (tan(δ)max) au cours d'un balayage en déformation à contrainte imposée.

De manière inattendue, il est remarquable de constater que cette augmentation de rigidité à 23°C n'est pas accompagnée d'une déchéance en allongement rupture.

On constate donc que la composition de caoutchouc conforme à l'invention à base de silice et comprenant un élastomère greffé, présente des modules MSA100% et MSA 300% élevés tout en augmentant significativement les propriétés à la rupture et en baissant également très fortement l'hystérèse de la composition.

## Revendications

1. Composition de caoutchouc à base d'au moins un élastomère diénique, une charge renforçante, un agent de réticulation chimique, et un agent de modification, éventuellement déjà greffé sur l'élastomère, choisi parmi les composés comprenant au moins un groupement Q, et au moins un groupement A reliés entre eux par au moins et de préférence un groupement « espaceur » Sp dans lequel :
- Q comprend un dipôle contenant au moins et de préférence un atome d'azote,
- A comprend un groupe associatif comprenant au moins un atome d'azote,
- Sp est un atome ou un groupe d'atomes formant une liaison entre Q et A,
A étant choisi parmi les groupes imidazolidinyle, triazolyle, triazinyle, bis-uréyle, uréido-pyrimidyle.

2. Composition selon la revendication 1, **caractérisée en ce que** le groupement A répond à l'une des formules (II) à (VI) suivantes : 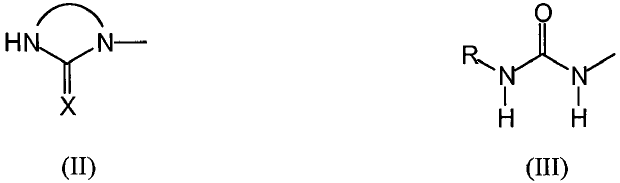 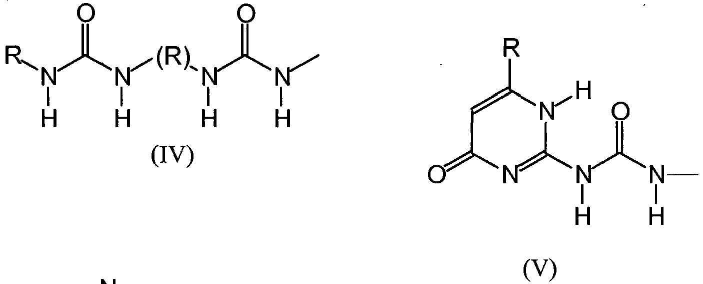 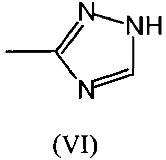 où :
- R désigne un groupement hydrocarboné pouvant éventuellement contenir des hétéroatomes,
- X désigne un atome d'oxygène ou de soufre, de préférence un atome d'oxygène.

3. Composition selon l'une quelconque des revendications 1 à 2, **caractérisée en ce que** Q comprend une fonction oxyde de nitrile, nitrone ou nitrile imine.

4. Composition selon l'une quelconque des revendications 1 à 3, **caractérisée en ce que** le groupement Q est un groupe de formule (VII), (VIII) ou (IX) suivante: 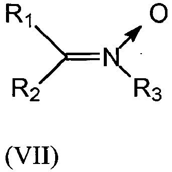
R₄-C≡N→ O (VIII)
R₅-C≡N→ N-R₆ (IX)
dans lesquelles R1 à R6 sont choisis indépendamment parmi un groupe espaceur Sp, un atome d'hydrogène, un groupe alkyle en C₁-C₂₀ linéaire ou ramifié, un groupe cycloalkyle en C₃-C₂₀ linéaire ou ramifié, un groupe aryle en C₆-C₂₀ linéaire ou ramifié, et un groupe de formule (X) 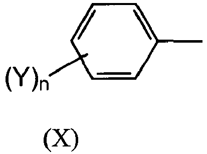 dans laquelle n représente 1, 2, 3, 4 ou 5 et chaque Y représente indépendamment un groupe espaceur Sp, un groupe alkyle ou un halogénure.

5. Composition selon l'une quelconque des revendications 1 à 4, **caractérisée en ce que** le groupement « espaceur » est une chaîne alkyle linéaire ou ramifiée en C₁-C₂₄, de préférence C₁-C₁₀ éventuellement comprenant un ou plusieurs hétéroatomes choisis parmi les atomes d'azote, de soufre, de silicium ou d'oxygène.

6. Composition selon l'une quelconque des revendications 1 à 5, **caractérisée en ce que** le groupement Q est un groupement de formule (XIa) ou (XIb): 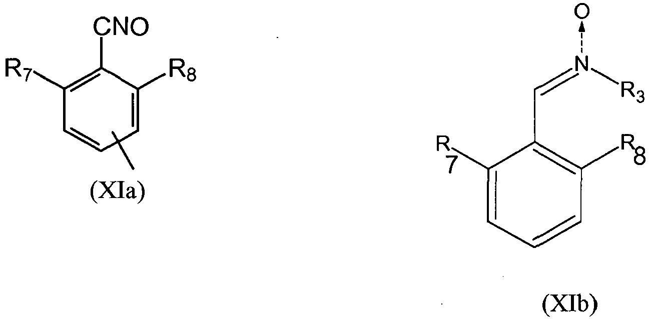 dans lesquelles R7 et R8 représentent indépendamment un hydrogène ou un groupe alkyle en C1-C5, un alcoxyle ou un halogénure et de préférence R7 et R8 représentent indépendamment un groupe alkyle ou un halogénure, et plus préférentiellement R7 et R8 représentent indépendamment un groupe méthyle ou un atome de chlore, R₃ est tel que défini dans la revendication 5 et le groupement A est un groupement de formule (XII)

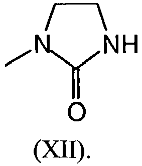

7. Composition selon l'une quelconque des revendications 1 à 6, **caractérisée en ce que** l'agent de modification est choisi parmi les composés de formule (XIII) à (XXI) suivantes: 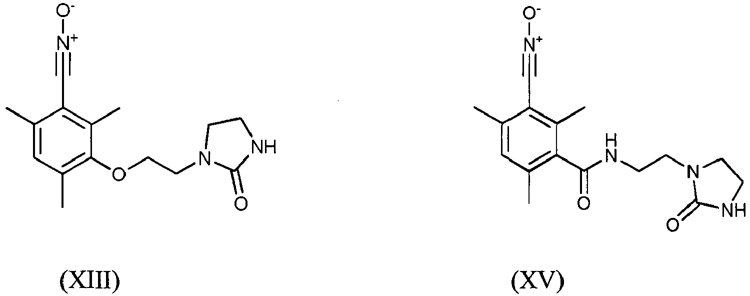 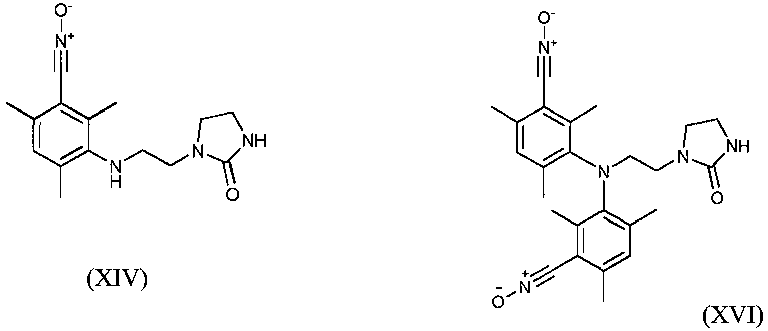 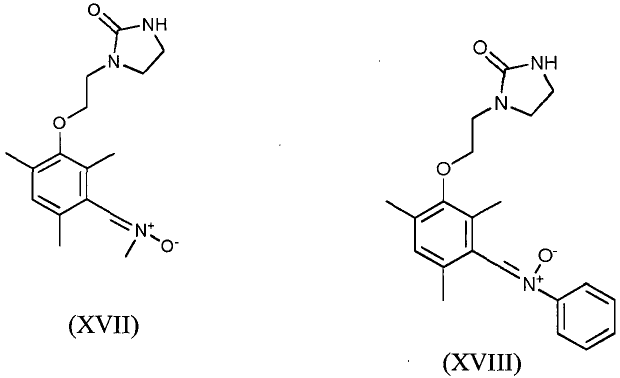 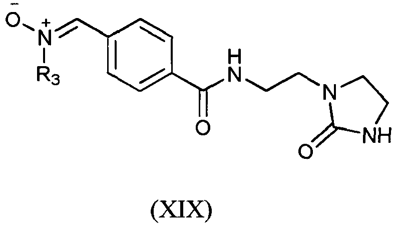 R3 étant tel que défini dans la revendication 4

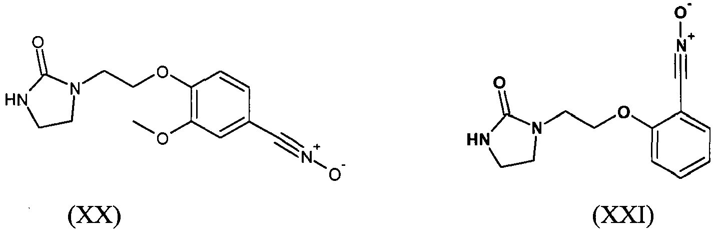

8. Composition selon l'une quelconque des revendications 1 à 5, **caractérisée en ce que** l'agent de modification est choisi parmi les composés de formule (XXII) et (XXIII) suivantes:

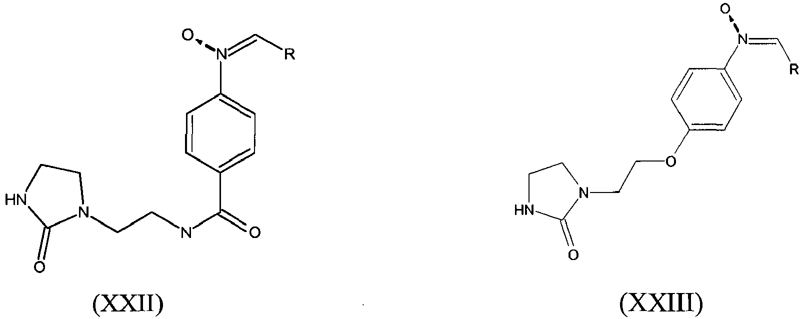

9. Composition selon l'une quelconque des revendications 1 à 8, **caractérisée en ce que** l'élastomère diénique est un élastomère diénique essentiellement insaturé choisi parmi le caoutchouc naturel, les polyisoprènes de synthèse, les polybutadiènes, les copolymères de butadiène, les copolymères d'isoprène et les mélanges de ces élastomères.

10. Composition selon l'une quelconque des revendications 1 à 8, **caractérisée en ce que** l'élastomère diénique est un élastomère essentiellement saturé choisi parmi les caoutchoucs butyle et les copolymères de diènes et d'alpha-oléfines tels que les EPDM.

11. Composition selon l'une quelconque des revendications précédentes, **caractérisée en ce que** l'agent de réticulation chimique comprend 0,5 à 12 pce de soufre, de préférence 1 à 10 pce de soufre, ou 0,01 à 10 pce d'un ou plusieurs composés peroxydes.

12. Composition selon l'une quelconque des revendications précédentes, **caractérisée en ce que** le taux d'agent de modification varie de 0,01 à 50% molaire, de préférence de 0.01%mol à 5%mol.

13. Procédé pour préparer une composition de caoutchouc à base d'au moins un élastomère diénique, une charge renforçante, un agent de réticulation chimique et un agent de modification, **caractérisé en ce qu'**il comprend les étapes suivantes :
- modifier l'élastomère diénique par greffage post-polymérisation en solution ou en masse d'un agent de modification comprenant au moins un groupement Q, et au moins un groupement A reliés entre eux par au moins et de préférence un groupement « espaceur » Sp dans lequel :
- Q comprend un dipôle contenant au moins et de préférence un atome d'azote,
- A comprend un groupe associatif comprenant au moins un atome d'azote,
- Sp est un atome ou un groupe d'atomes formant une liaison entre Q et A,
- incorporer à l'élastomère diénique ainsi greffé par l'agent de modification, la charge renforçante, en malaxant thermomécaniquement le tout, en une ou plusieurs fois, jusqu'à atteindre une température maximale comprise entre 130°C et 200°C,
- refroidir l'ensemble à une température inférieure à 100°C,
- incorporer ensuite l'agent de réticulation chimique,
- malaxer le tout jusqu'à une température maximale inférieure à 120°C,
- extruder ou calandrer la composition de caoutchouc ainsi obtenue
A étant choisi parmi les groupes imidazolidinyle, triazolyle, triazinyle, bis-uréyle, uréido-pyrimidyle.

14. Procédé pour préparer une composition de caoutchouc à base d'au moins un élastomère diénique, une charge renforçante, un agent de réticulation chimique et d'un agent de modification, **caractérisé en ce qu'**il comprend les étapes suivantes :
- incorporer au cours du mélangeage en masse à l'élastomère diénique un agent de modification comprenant au moins un groupement Q, et au moins un groupement A reliés entre eux par au moins et de préférence un groupement « espaceur » Sp dans lequel :
- Q comprend un dipôle contenant au moins et de préférence un atome d'azote,
- A comprend un groupe associatif comprenant au moins un atome d'azote,
- Sp est un atome ou un groupe d'atomes formant une liaison entre Q et A,
et, de préférence subséquemment, la charge renforçante
- refroidir l'ensemble à une température inférieure à 100°C,
- incorporer ensuite l'agent de réticulation chimique,
- malaxer le tout jusqu'à une température maximale inférieure à 120°C,
- extruder ou calandrer la composition de caoutchouc ainsi obtenue,
A étant choisi parmi les groupes imidazolidinyle, triazolyle, triazinyle, bis-uréyle, uréido-pyrimidyle.

15. Pneumatique comprenant une composition de caoutchouc telle que décrite dans les revendications 1 à 13.

## Patentansprüche

1. Kautschukzusammensetzung auf Basis von mindestens einem Dienelastomer, einem verstärkenden Füllstoff, einem chemischen Vernetzungsmittel und einem gegebenenfalls bereits auf das Elastomer aufgepfropften Modifizierungsmittel, ausgewählt aus Verbindungen mit mindestens einer Gruppe Q und mindestens einer Gruppe A, die über mindestens und vorzugsweise eine Spacergruppe Sp miteinander verbunden sind, wobei:
- Q einen Dipol, der mindestens und vorzugsweise ein Stickstoffatom umfasst, umfasst,
- A eine assoziative Gruppe mit mindestens einem Stickstoffatom umfasst,
- Sp ein Atom oder eine Gruppe von Atomen, das bzw. die eine Bindung zwischen Q und A bildet, ist,
wobei A aus Imidazolidinyl-, Triazolyl-, Triazinyl-, Bisureyl- und Ureidopyrimidylgruppen ausgewählt ist.

2. Zusammensetzung nach Anspruch 1, **dadurch gekennzeichnet, dass** die Gruppe A einer der folgenden Formeln (II) bis (VI) entspricht: 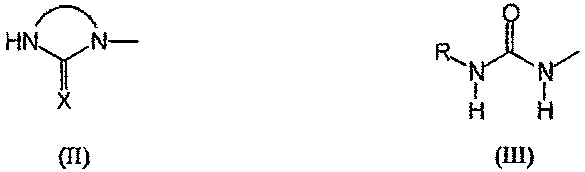 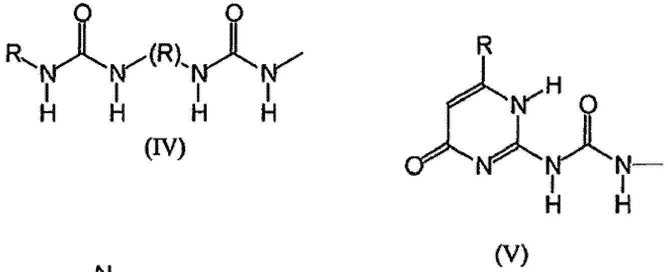 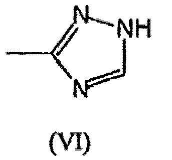 wobei:
- R für eine Kohlenwasserstoffgruppe, die gegebenenfalls Heteroatome enthalten kann, steht,
- X für ein Sauerstoff- oder Schwefelatom, vorzugsweise ein Sauerstoffatom, steht.

3. Zusammensetzung nach einem der Ansprüche 1 bis 2, **dadurch gekennzeichnet, dass** Q eine Nitriloxid-, Nitron- oder Nitriliminfunktion umfasst.

4. Zusammensetzung nach einem der Ansprüche 1 bis 3, **dadurch gekennzeichnet, dass** es sich bei der Gruppe Q um eine Gruppe der folgenden Formel (VII), (VIII) oder (IX) handelt: 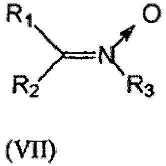
**R₄-C≡N→ O** **(VIII)**
**R₅-C≡N→ N-R₆** **(IX)**
worin R1 bis R6 unabhängig aus einer Spacergruppe Sp, einem Wasserstoffatom, einer linearen oder verzweigten C₁-C₂₀-Alkylgruppe, einer linearen oder verzweigten C₃-C₂₀-Cycloalkylgruppe, einer linearen oder verzweigten C₆-C₂₀-Arylgruppe und einer Gruppe der Formel (X) 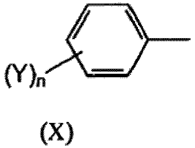 worin n für 1, 2, 3, 4 oder 5 steht und Y jeweils unabhängig für eine Spacergruppe Sp, eine Alkylgruppe oder ein Halogenid steht, ausgewählt sind.

5. Zusammensetzung nach einem der Ansprüche 1 bis 4, **dadurch gekennzeichnet, dass** es sich bei der Spacergruppe um eine lineare oder verzweigte C₁-C₂₄-Alkylkette, vorzugsweise C₁-C₁₀-Alkylkette, die gegebenenfalls ein oder mehrere Heteroatome, die aus Stickstoff-, Schwefel-, Silicium- oder Sauerstoffatomen ausgewählt sind, umfasst, handelt.

6. Zusammensetzung nach einem der Ansprüche 1 bis 5, **dadurch gekennzeichnet, dass** es sich bei der Gruppe Q um eine Gruppe der Formel (XIa) oder (XIb) handelt: 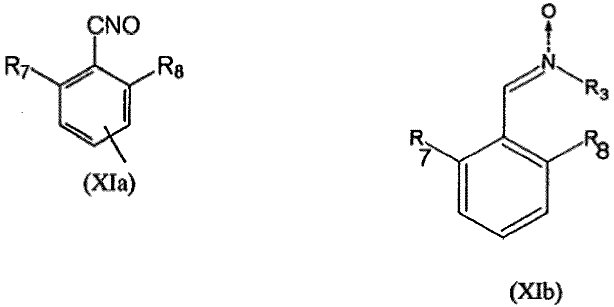 worin R7 und R8 unabhängig für ein Wasserstoff oder eine C1-C5-Alkylgruppe, ein Alkoxy oder ein Halogenid stehen und R7 und R8 vorzugsweise unabhängig für eine Alkylgruppe oder ein Halogenid stehen und R7 und R8 weiter bevorzugt unabhängig für eine Methylgruppe oder ein Chloratom stehen, R₃ wie in Anspruch 5 definiert ist und es sich bei der Gruppe A um eine Gruppe der Formel (XII) 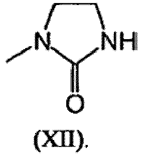 handelt.

7. Zusammensetzung nach einem der Ansprüche 1 bis 6, **dadurch gekennzeichnet, dass** das Modifizierungsmittel aus den Verbindungen der folgenden Formeln (XIII) bis (XXI) ausgewählt ist: 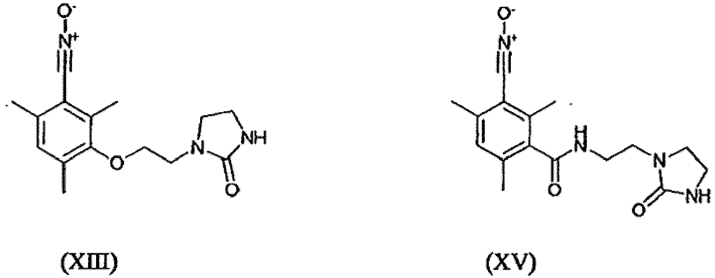 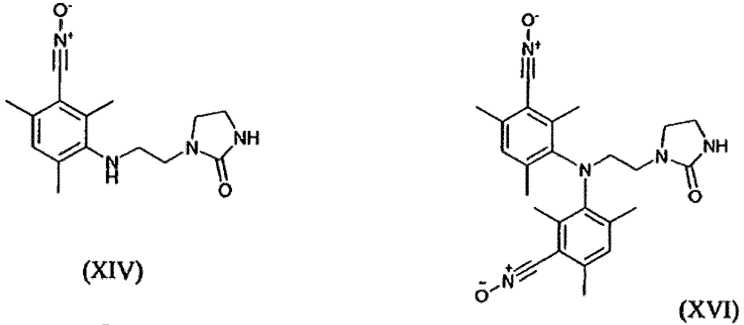 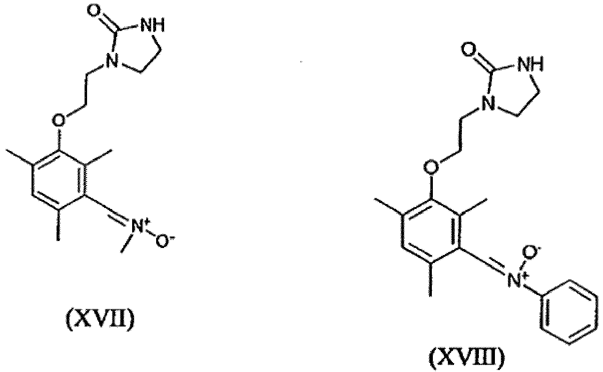 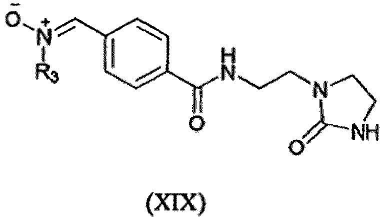 wobei R3 wie in Anspruch 4 definiert ist,

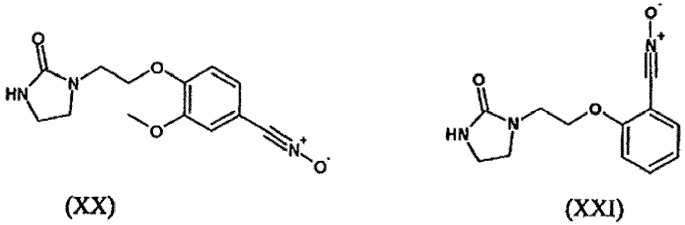

8. Zusammensetzung nach einem der Ansprüche 1 bis 5, **dadurch gekennzeichnet, dass** das Modifizierungsmittel aus den Verbindungen der folgenden Formeln (XXII) und (XXIII) ausgewählt ist:

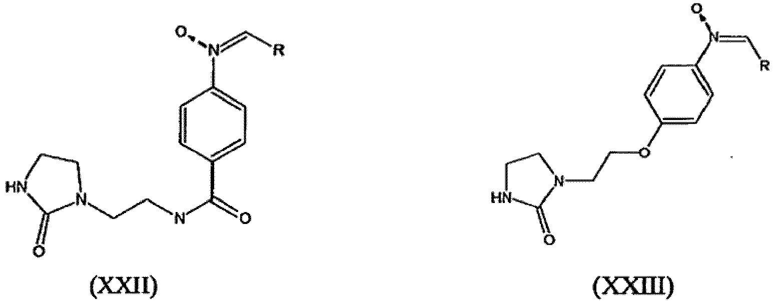

9. Zusammensetzung nach einem der Ansprüche 1 bis 8, **dadurch gekennzeichnet, dass** es sich bei dem Dienelastomer um ein im Wesentlichen ungesättigtes Dienelastomer handelt, das aus Naturkautschuk, synthetischen Polyisoprenen, Polybutadienen, Butadien-Copolymeren, Isopren-Copolymeren und Mischungen dieser Elastomere ausgewählt ist.

10. Zusammensetzung nach einem der Ansprüche 1 bis 8, **dadurch gekennzeichnet, dass** es sich bei dem Dienelastomer um ein im Wesentlichen gesättigtes Elastomer handelt, das aus Butylkautschuken und Copolymeren von Dienen und alpha-Olefinen wie EPDM ausgewählt ist.

11. Zusammensetzung nach einem der vorhergehenden Ansprüche, **dadurch gekennzeichnet, dass** das chemische Vernetzungsmittel 0,5 bis 12 phe Schwefel, vorzugsweise 1 bis 10 phe Schwefel, oder 0,01 bis 10 phe einer oder mehrerer Peroxidverbindungen umfasst.

12. Zusammensetzung nach einem der vorhergehenden Ansprüche, **dadurch gekennzeichnet, dass** der Modifizierungsmittelgehalt von 0,01 bis 50 Mol-%, vorzugsweise 0,01 Mol-% bis 5 Mol-%, variiert.

13. Verfahren zur Herstellung einer Kautschukzusammensetzung auf Basis von mindestens einem Dienelastomer, einem verstärkenden Füllstoff, einem chemischen Vernetzungsmittel und einem Modifizierungsmittel, **dadurch gekennzeichnet, dass** es folgende Schritte aufweist:
- Modifizieren des Dienelastomers durch der Polymerisation nachgeschaltetes, in Lösung oder in Substanz erfolgendes Aufpfropfen eines Modifizierungsmittels mit mindestens einer Gruppe Q und mindestens einer Gruppe A, die über mindestens und vorzugsweise eine Spacergruppe Sp miteinander verbunden sind, wobei:
- Q einen Dipol, der mindestens und vorzugsweise ein Stickstoffatom umfasst, umfasst,
- A eine assoziative Gruppe mit mindestens einem Stickstoffatom umfasst,
- Sp ein Atom oder eine Gruppe von Atomen, das bzw. die eine Bindung zwischen Q und A bildet, ist,
- Einarbeiten des verstärkenden Füllstoffs in das so mit dem Modifizierungsmittel gepfropfte Dienelastomer, indem man das Ganze ein- oder mehrmals thermomechanisch knetet, bis eine Höchsttemperatur zwischen 130°C und 200°C erreicht ist,
- Abkühlen des Ganzen auf eine Temperatur von weniger als 100°C,
- anschließendes Einarbeiten des chemischen Vernetzungsmittels,
- Kneten des Ganzen bis zu einer Höchsttemperatur von weniger als 120°C,
- Extrudieren oder Kalandrieren der so erhaltenen Kautschukzusammensetzung,
wobei A aus Imidazolidinyl-, Triazolyl-, Triazinyl-, Bisureyl- und Ureidopyrimidylgruppen ausgewählt ist.

14. Verfahren zur Herstellung einer Kautschukzusammensetzung auf Basis von mindestens einem Dienelastomer, einem verstärkenden Füllstoff, einem chemischen Vernetzungsmittel und einem Modifizierungsmittel, **dadurch gekennzeichnet, dass** es folgende Schritte aufweist:
- Einarbeiten eines Modifizierungsmittels mit mindestens einer Gruppe Q und mindestens einer Gruppe A, die über mindestens und vorzugsweise eine Spacergruppe Sp miteinander verbunden sind, wobei:
- Q einen Dipol, der mindestens und vorzugsweise ein Stickstoffatom umfasst, umfasst,
- A eine assoziative Gruppe mit mindestens einem Stickstoffatom umfasst,
- Sp ein Atom oder eine Gruppe von Atomen, das bzw. die eine Bindung zwischen Q und A bildet, ist, und vorzugsweise anschließend des verstärkenden Füllstoffs in das Dienelastomer im Lauf des Mischens in Substanz,
- Abkühlen des Ganzen auf eine Temperatur von weniger als 100°C,
- anschließendes Einarbeiten des chemischen Vernetzungsmittels,
- Kneten des Ganzen bis zu einer Höchsttemperatur von weniger als 120°C,
- Extrudieren oder Kalandrieren der so erhaltenen Kautschukzusammensetzung,
wobei A aus Imidazolidinyl-, Triazolyl-, Triazinyl-, Bisureyl- und Ureidopyrimidylgruppen ausgewählt ist.

15. Reifen, umfassend eine Kautschukzusammensetzung gemäß einem der Ansprüche 1 bis 12.

## Claims

1. Rubber composition based on at least one diene elastomer, a reinforcing filler, a chemical crosslinker and a modifier, optionally already grafted onto the elastomer, selected from compounds comprising at least one group Q, and at least one group A, which are joined to one another by at least one and preferably one spacer group Sp, wherein:
- Q comprises a dipole containing at least one and preferably one nitrogen atom,
- A comprises an associative group comprising at least one nitrogen atom,
- Sp is an atom or group of atoms forming a bond between Q and A,
A being selected from imidazolidinyl, triazolyl, triazinyl, bis-ureyl, and ureido-pyrimidyl groups.

2. Composition according to Claim 1, **characterized in that** the group A conforms to one of the formulae (II) to (VI) below: 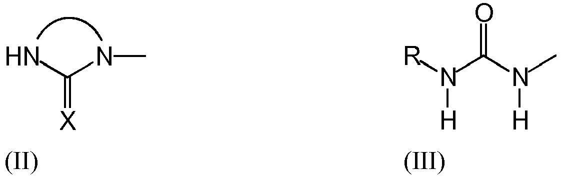 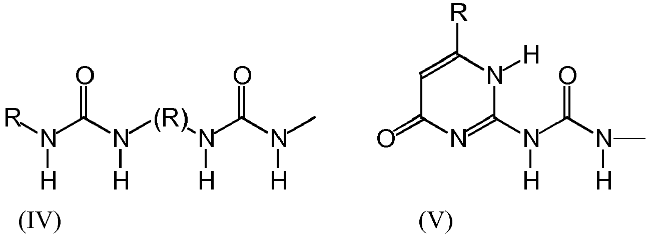 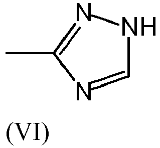 where:
- R denotes a hydrocarbon group possibly optionally containing heteroatoms,
- X denotes an oxygen or sulphur atom, preferably an oxygen atom.

3. Composition according to any of Claims 1 to 2, **characterized in that** Q comprises a nitrile oxide, nitrone or imine nitrile function.

4. Composition according to any of Claims 1 to 3, **characterized in that** the group Q is a group of formula (VII), (VIII) or (IX) below: 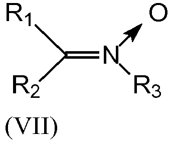
R₄-C≡N→O (VIII)
R₅-C≡N→N-R₆ (IX)
in which R1 to R6 are selected independently from a spacer group Sp, a hydrogen atom, a linear or branched C₁-C₂₀ alkyl group, a linear or branched C₃-C₂₀ cycloalkyl group, a linear or branched C₆-C₂₀ aryl group and a group of formula (X) 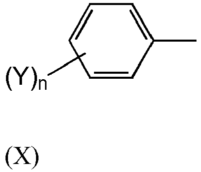 in which n represents 1, 2, 3, 4 or 5 and each Y represents independently a spacer group Sp, an alkyl group or a halide.

5. Composition according to any of Claims 1 to 4, **characterized in that** the spacer group is a C₁-C₂₄, preferably C₁-C_{10,} linear or branch alkyl chain optionally comprising one or more heteroatoms selected from nitrogen, sulphur, silicon or oxygen atoms.

6. Composition according to any of Claims 1 to 5, **characterized in that** the group Q is a group of formula (XIa) or (XIb): 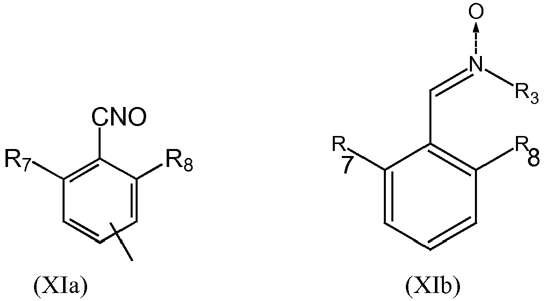 in which R7 and R8 represent independently a hydrogen or a C₁-C₅ alkyl group, an alkoxy or a halide, and preferably R7 and R8 represent independently an alkyl group or a halide, and more preferably R7 and R8 represent independently a methyl group or a chlorine atom, R₃ is as defined in Claim 5, and the group A is a group of formula (XII)

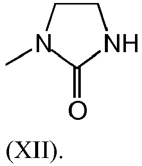

7. Composition according to any of Claims 1 to 6, **characterized in that** the modifier is selected from the compounds of formula (XIII) to (XXI) below: 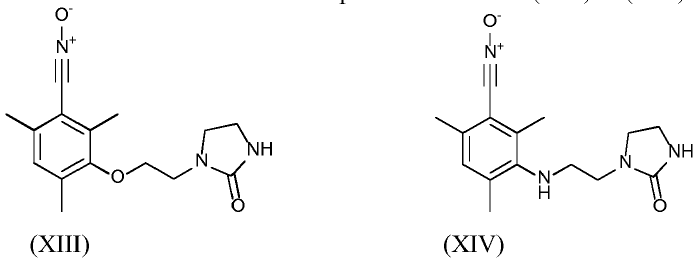 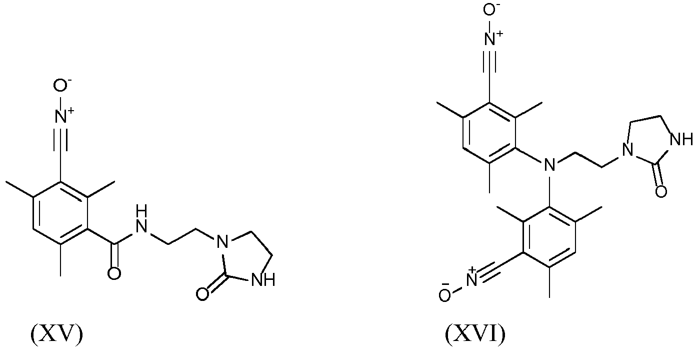 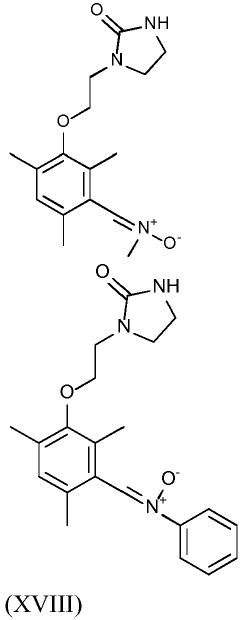 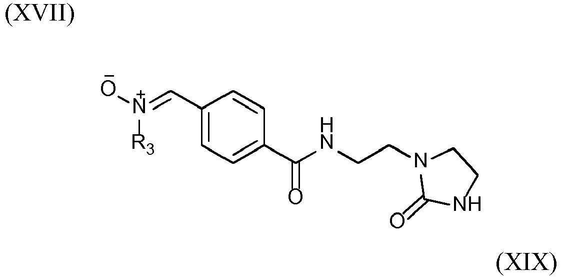 where R₃ is as defined in Claim 4

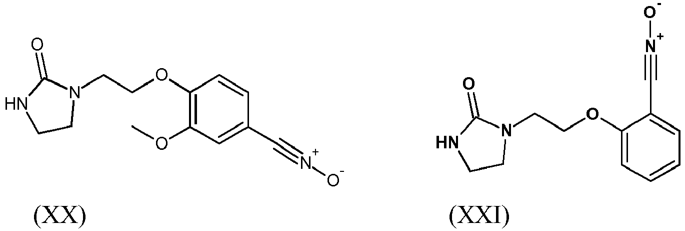

8. Composition according to any of Claims 1 to 5, **characterized in that** the modifier is selected from the compounds of formula (XXII) and (XXIII) below:

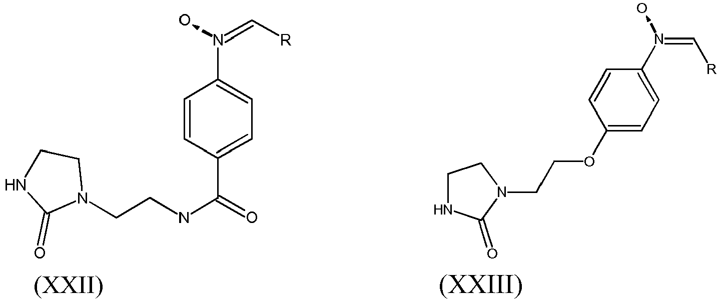

9. Composition according to any of Claims 1 to 8, **characterized in that** the diene elastomer is a substantially unsaturated diene elastomer selected from natural rubber, synthetic polyisoprenes, polybutadienes, butadiene copolymers, isoprene copolymers and mixtures of these elastomers.

10. Composition according to any of Claims 1 to 8, **characterized in that** the diene elastomer is a substantially saturated elastomer selected from butyl rubbers and the copolymers of dienes and alpha-olefins such as EPDMs.

11. Composition according to any of the preceding claims, **characterized in that** the chemical crosslinker comprises 0.5 to 12 phr of sulphur, preferably 1 to 10 phr of sulphur, or 0.01 to 10 phr of one or more peroxide compounds.

12. Composition according to any of the preceding claims, **characterized in that** the proportion of modifier varies from 0.01 to 50 mol%, preferably from 0.01 mol% to 5 mol%.

13. Method for preparing a rubber composition based on at least one diene elastomer, a reinforcing filler, a chemical crosslinker and a modifier, **characterized in that** it comprises the following steps:
- modifying the diene elastomer by post-polymerization grafting in solution or in bulk of a modifier comprising at least one group Q, and at least one group A, which are joined to one another by at least one and preferably one spacer group Sp, wherein:
- Q comprises a dipole containing at least one and preferably one nitrogen atom,
- A comprises an associative group comprising at least one nitrogen atom,
- Sp is an atom or group of atoms forming a bond between Q and A,
- incorporating the reinforcing filler into the diene elastomer thus grafted with the modifier, by thermomechanically kneading the combined mixture, one or more times, until a maximum temperature of between 130°C and 200°C is reached,
- cooling the mixture to a temperature of less than 100°C,
- subsequently incorporating the chemical crosslinker,
- kneading the complete mixture to a maximum temperature of less than 120°C,
- extruding or calendering the resulting rubber composition,
A being selected from imidazolidinyl, triazolyl, triazinyl, bis-ureyl, and ureido-pyrimidyl groups.

14. Method for preparing a rubber composition based on at least one diene elastomer, a reinforcing filler, a chemical crosslinker and a modifier, **characterized in that** it comprises the following steps:
- incorporating into the diene elastomer, in the course of mixing in bulk, a modifier comprising at least one group Q, and at least one group A, which are joined to one another by at least one and preferably one spacer group Sp, wherein:
- Q comprises a dipole containing at least one and preferably one nitrogen atom,
- A comprises an associative group comprising at least one nitrogen atom,
- Sp is an atom or group of atoms forming a bond between Q and A, and, preferably subsequently the reinforcing filler
- cooling the mixture to a temperature of less than 100°C,
- subsequently incorporating the chemical crosslinker,
- kneading the complete mixture to a maximum temperature of less than 120°C,
- extruding or calendering the resulting rubber composition,
A being selected from imidazolidinyl, triazolyl, triazinyl, bis-ureyl, and ureido-pyrimidyl groups.

15. Tyre comprising a rubber composition as described in Claims 1 to 12.
